(19) Europäisches Patentamt / European Patent Office / Office européen des brevets

(11) **EP 4 685 792 A1**

(12) **EUROPEAN PATENT APPLICATION**
published in accordance with Art. 153(4) EPC

(43) Date of publication:
**28.01.2026 Bulletin 2026/05**

(21) Application number: **24855570.8**

(22) Date of filing: **30.07.2024**

(51) International Patent Classification (IPC):
**G10L 19/00** (2013.01)     **H04L 65/65** (2022.01)

(52) Cooperative Patent Classification (CPC):
**G10L 19/00; G10L 19/008; G10L 19/16;
H04L 65/65**

(86) International application number:
**PCT/CN2024/108388**

(87) International publication number:
**WO 2025/039844 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.08.2023 CN 202311066284**

(71) Applicant: **Huawei Technologies Co., Ltd.
Shenzhen, Guangdong 518129 (CN)**

(72) Inventors:
- **SUN, Zhao
  Shenzhen, Guangdong 518129 (CN)**
- **WANG, Zhe
  Shenzhen, Guangdong 518129 (CN)**
- **ZUO, Jun
  Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54) **AUDIO PARAMETER NEGOTIATION METHOD AND COMMUNICATION DEVICE**

(57)    An audio parameter negotiation method and a communication apparatus are provided. The method includes: A second communication entity sends fifth audio format information and sixth audio format information to a first communication entity based on an IVAS encoding audio format and an IVAS decoding audio format that are supported by the first communication entity and an IVAS encoding audio format and an IVAS decoding audio format that are supported by the second communication entity. The fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding. According to the method, negotiation about a finer-granularity IVAS codec audio format can be implemented.

400

S410: A second communication entity receives first audio format information and second audio format information

S430: The second communication entity determines fifth audio format information and sixth audio format information based on the first audio format information, the second audio format information, third audio format information, and fourth audio format information

S420: The second communication entity sends the fifth audio format information and the sixth audio format information

FIG. 4

## Description

This application claims priority to Chinese Patent Application No. 202311066284.X, filed with the China National Intellectual Property Administration on August 22, 2023 and entitled "AUDIO PARAMETER NEGOTIATION METHOD AND COMMUNICATION APPARATUS", which is incorporated herein by reference in its entirety.

## TECHNICAL FIELD

This application relates to the field of communication technologies, and in particular, to an audio parameter negotiation method and a communication apparatus.

## BACKGROUND

The adaptive multi-rate (adaptive multi-rate, AMR) algorithm and enhanced voice services (enhance voice services, EVS) are conventional voice codec technologies that support only mono sound effects, and cannot meet immersive voice experience requirements of extended reality (extended reality, XR) services. The immersive voice and audio services (immersive voice and audio services, IVAS) speech codec is a brand-new immersive speech codec. Compared with the conventional speech codecs, the IVAS speech codec supports more audio format types and a wider range of rates, and additionally includes rendering features to provide a better voice call experience. The IVAS speech codec supports a plurality of audio formats, each audio format including an audio format type and a rate supported by the audio format type. For example, according to the complexity of the audio format types from low to high, the audio format types may include mono (mono), stereo (stereo), multi-channel (multi-channel), objects (objects), first-order ambisonics (first-order ambisonics, FOA), higher-order ambisonics (higher-order ambisonics, HOA), metadata-assisted spatial audio (metadata-assisted spatial audio, MASA), and the like.

Currently, during speech codec parameter negotiation, a terminal #1 and a terminal #2 negotiate a codec type and a rate. In a possible scenario, the terminal #1 and the terminal #2 determine that a speech codec type used in subsequent audio communication is IVAS speech codec. Since IVAS speech codec is a complex codec that supports a plurality of audio formats, on a basis of determining to use the IVAS codec, how to negotiate a finer-granularity IVAS codec audio format becomes an urgent problem to be resolved.

## SUMMARY

This application provides an audio parameter negotiation method and a communication apparatus, to negotiate an IVAS codec audio format at a finer granularity.

According to a first aspect, an audio parameter negotiation method is provided. The method may be performed by a second communication entity, or may be performed by a component (for example, a chip or a circuit) of the second communication entity.

The method includes: receiving first audio format information and second audio format information, where the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding; and sending fifth audio format information and sixth audio format information based on the first audio format information, the second audio format information, third audio format information, and fourth audio format information, where the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

In the foregoing technical solution, an IVAS speech codec negotiation mechanism with a finer granularity is provided. On a basis of using an IVAS speech codec by the first communication entity and the second communication entity, an IVAS encoding audio format and an IVAS decoding audio format that are used when the first communication entity and the second communication entity perform audio communication are further negotiated, so that the first communication entity and the second communication entity can perform audio communication based on actually supported IVAS codec capabilities of the first communication entity and the second communication entity by using the appropriate IVAS encoding audio format and the appropriate IVAS decoding audio format.

In the foregoing technical solution, an IVAS codec audio format is negotiated at a finer granularity, so that a waste of power consumption and bandwidths can be further avoided. The beneficial effects are specifically described. Currently, an audio format used by a terminal for IVAS encoding may be different from an audio format used by the terminal for IVAS decoding. For example, audio formats used by a terminal #1 for IVAS encoding and IVAS decoding are respectively an audio format #1 and an audio format #2, audio formats used by a terminal #2 for IVAS encoding and IVAS decoding are respectively an audio format #3 and an audio format #4. In this case, in a process in which the terminal #1 and the terminal #2 perform audio data transmission, the terminal #1 and the terminal #2 perform codec processing based on audio formats corresponding to maximum IVAS codec capabilities currently supported by the terminal #1 and the terminal #2. For example, when a maximum IVAS encoding capability of the terminal #1 is better than a maximum IVAS decoding capability of the terminal #2, the terminal #1 performs encoding processing on to-be-sent speech content based on the maximum IVAS encoding capability supported by the terminal #1, to generate audio data #1, and sends the audio data #1 to the terminal #2, and the terminal #2 can perform decoding processing on the audio data #1 only by using the maximum IVAS decoding capability of the terminal #2. Because the codec capabilities of the terminal #1 and the terminal #2 are not equal, encoding power consumption of the terminal #1 is wasted. In addition, a better IVAS encoding capability indicates more bandwidths that need to be occupied when the generated audio data is transmitted. Therefore, encoding performed based on the encoding capability of the terminal #1 further causes a waste of bandwidths. However, based on the method provided in this application, the second communication entity and the first communication entity perform IVAS encoding and IVAS decoding respectively based on the fifth audio format information. Therefore, an IVAS encoding capability of the second communication entity is equivalent to an IVAS decoding capability of the first communication entity. In this case, regardless of whether the second communication entity performs encoding based on any fifth audio format indicated by the fifth audio format information, the first communication entity can perform decoding by using an equivalent IVAS decoding capability. Therefore, power consumption or bandwidths are not wasted. Similarly, the second communication entity and the first communication entity perform IVAS decoding and IVAS encoding respectively based on the sixth audio format information, that is, an IVAS decoding capability of the second communication entity is equivalent to an IVAS encoding capability of the first communication entity. In this case, regardless of whether the first communication entity performs encoding based on any sixth audio format indicated by the sixth audio format information, the second communication entity may perform decoding by using an equivalent IVAS decoding capability, to avoid a waste of power consumption and bandwidths.

It should be noted that, in a possible scenario, the first communication entity and the second communication entity perform only unidirectional audio communication. For example, if only the first communication entity can send audio data to the second communication entity between the first communication entity and the second communication entity, an audio format available to the first communication entity for IVAS encoding is carried in the first audio format information and the second audio format information, only the first audio format information in the first audio format information and the second audio format information may be carried, and the second audio format information does not need to be carried. For another example, if only the second communication entity can send audio data to the first communication entity between the first communication entity and the second communication entity, only the second audio format information in the first audio format information and the second audio format information may be carried, and the first audio format information does not need to be carried.

In some implementations of the first aspect, the at least one fifth audio format is an intersection set of the at least one second audio format and the at least one third audio format; and the at least one sixth audio format is an intersection set of the at least one first audio format and the at least one fourth audio format.

In some implementations of the first aspect, the receiving the first audio format information and the second audio format information includes: receiving the first audio format information and the second audio format information from the first communication entity; and the sending the fifth audio format information and the sixth audio format information includes: sending the fifth audio format information and the sixth audio format information to the first communication entity.

In some implementations of the first aspect, the receiving the first audio format information and the second audio format information from the first communication entity includes: receiving a first request message from the first communication entity, where the first request message is an invite invite request message or a re-invite re-invite request message, and the first request message includes the first audio format information and the second audio format information; and the sending the fifth audio format information and the sixth audio format information to the first communication entity includes: sending a response message of the first request message to the first communication entity, where the response message includes the fifth audio format information and the sixth audio format information.

In some implementations of the first aspect, the first communication entity is a calling terminal device, and the second communication entity is a called terminal device; the first communication entity is a calling terminal device, and the second communication entity is a media resource function network element; or the first communication entity is a media resource function network element, and the second communication entity is a called terminal device.

In some implementations of the first aspect, the receiving the first audio format information and the second audio format information from the first communication entity includes: receiving a first response message from the first communication entity, where the first response message is a 18X response message or a 200 response message, the first response message includes the first audio format information and the second audio format information, and the 18X response message is a 180 response message or a 183 response message; and the sending the fifth audio format information and the sixth audio format information to the first communication entity includes: sending an acknowledgment message of the first response message to the first communication entity, where the acknowledgment message includes the fifth audio format information and the sixth audio format information.

In some implementations of the first aspect, the first communication entity is a called terminal device, and the second communication entity is a calling terminal device; the first communication entity is a called terminal device, and the second communication entity is a media resource function network element; or the first communication entity is a media resource function network element, and the second communication entity is a calling terminal device.

In some implementations of the first aspect, the receiving the first audio format information and the second audio format information includes: receiving the first audio format information and the second audio format information from a third communication entity; and the sending the fifth audio format information and the sixth audio format information includes: sending the fifth audio format information and the sixth audio format information to the third communication entity.

In some implementations of the first aspect, the receiving the first audio format information and the second audio format information from the third communication entity includes: receiving a first request message from the third communication entity, where the first request message is an invite invite request message or a re-invite re-invite request message, and the first request message includes the first audio format information and the second audio format information; and the sending the fifth audio format information and the sixth audio format information to the third communication entity includes: sending a response message of the first request message to the third communication entity, where the response message includes the fifth audio format information and the sixth audio format information.

In some implementations of the first aspect, the third communication entity is a proxy-call session control function network element, the second communication entity is a called terminal device, and the first communication entity is an internet protocol multimedia subsystem access gateway.

In some implementations of the first aspect, the receiving the first audio format information and the second audio format information from the third communication entity includes: receiving a first response message from the third communication entity, where the first response message is a 18X response message or a 200 response message, the first response message includes the first audio format information and the second audio format information, and the 18X response message is a 180 response message or a 183 response message; and the sending the fifth audio format information and the sixth audio format information to the third communication entity includes: sending an acknowledgment message of the first response message to the third communication entity, where the acknowledgment message includes the fifth audio format information and the sixth audio format information.

In some implementations of the first aspect, the third communication entity is a proxy-call session control function network element, the second communication entity is a calling terminal device, and the first communication entity is an internet protocol multimedia subsystem access gateway.

In some implementations of the first aspect, the method further includes: sending first audio data to the first communication entity, where the first audio data is generated by performing IVAS encoding based on the fifth audio format information.

In some implementations of the first aspect, the method further includes: receiving second audio data from the first communication entity; and performing IVAS decoding on the second audio data based on the sixth audio format information.

In some implementations of the first aspect, any one of the first audio format information to the fourth audio format information correspondingly includes an indicated type of the audio format and an indicated rate of the audio format.

In some implementations of the first aspect, the sending the fifth audio format information and the sixth audio format information based on the first audio format information, the second audio format information, the third audio format information, and the fourth audio format information includes: determining the fifth audio format information and the sixth audio format information based on the first audio format information, the second audio format information, the third audio format information, and the fourth audio format information.

In some implementations of the first aspect, the determining the fifth audio format information and the sixth audio format information based on the first audio format information, the second audio format information, the third audio format information, and the fourth audio format information includes: determining the fifth audio format information and the sixth audio format information based on a first policy, the first audio format information, the second audio format information, the third audio format information, and the fourth audio format information, where the first policy is performing searching from high to low according to complexity of a type of the at least one third audio format, or the first policy is performing searching from high to low according to complexity of a type of the at least one fourth audio format.

In some implementations of the first aspect, types of audio formats supported by an IVAS codec include mono, stereo, multi-channel, objects, first-order ambisonics FOA, higher-order ambisonics HOA, and metadata-assisted spatial audio MASA.

According to a second aspect, an audio parameter negotiation method is provided. The method may be performed by a first communication entity, or may be performed by a component (for example, a chip or a circuit) of the first communication entity.

The method includes: sending first audio format information and second audio format information to a second communication entity, where the first audio format information indicates at least one first audio format, the second audio format information indicates at least one second audio format, the first audio format is an audio format available to the first communication entity for immersive voice and audio services IVAS encoding, and the second audio format is an audio format available to the first communication entity for IVAS decoding; and receiving fifth audio format information and sixth audio format information from the second communication entity, where the fifth audio format information and the sixth audio format information are determined based on the first audio format information and the second audio format information, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

For beneficial effects of the second aspect, refer to the descriptions in the first aspect. Details are not described herein again.

In some implementations of the second aspect, the sending the first audio format information and the second audio format information includes: sending the first audio format information and the second audio format information to the second communication entity; and the receiving the fifth audio format information and the sixth audio format information includes: receiving the fifth audio format information and the sixth audio format information from the second communication entity.

In some implementations of the second aspect, the method further includes: receiving first audio data from the second communication entity; and performing IVAS decoding on the first audio data based on the first audio format.

In some implementations of the second aspect, the method further includes: sending second audio data to the second communication entity, where the second audio data is generated by performing IVAS encoding based on the second audio format.

In some implementations of the second aspect, the sending the first audio format information and the second audio format information to the second communication entity includes: sending a first request message to the second communication entity, where the first request message is an invite invite request message or a re-invite re-invite request message, and the first request message includes the first audio format information and the second audio format information; and the receiving the fifth audio format information and the sixth audio format information from the second communication entity includes: receiving a response message of the first request message from the second communication entity, where the response message includes the fifth audio format information and the sixth audio format information.

In some implementations of the second aspect, the first communication entity is a calling terminal device, and the second communication entity is a called terminal device; the first communication entity is a calling terminal device, and the second communication entity is a media resource function network element; or the first communication entity is a media resource function network element, and the second communication entity is a called terminal device.

In some implementations of the second aspect, the sending the first audio format information and the second audio format information to the second communication entity includes: sending a first response message to the second communication entity, where the first response message is a 18X response message or a 200 response message, the first response message includes the first audio format information and the second audio format information, and the 18X response message is a 180 response message or a 183 response message; and the receiving the fifth audio format information and the sixth audio format information from the second communication entity includes: receiving an acknowledgment message of the first response message from the second communication entity, where the acknowledgment message includes the fifth audio format information and the sixth audio format information.

In some implementations of the second aspect, the first communication entity is a called terminal device, and the second communication entity is a calling terminal device; the first communication entity is a called terminal device, and the second communication entity is a media resource function network element; or the first communication entity is a media resource function network element, and the second communication entity is a calling terminal device.

In some implementations of the second aspect, types of audio formats supported by an IVAS codec include mono, stereo, multi-channel, objects, first-order ambisonics FOA, higher-order ambisonics HOA, and metadata-assisted spatial audio MASA.

According to a third aspect, an audio parameter negotiation method is provided. The method may be performed by a third communication entity, or may be performed by a component (for example, a chip or a circuit) of the third communication entity.

The method includes: sending first audio format information and second audio format information to a second communication entity, where the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding; and receiving fifth audio format information and sixth audio format information from the second communication entity, where the fifth audio format information and the sixth audio format information are determined based on the first audio format information and the second audio format information, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

For beneficial effects of the third aspect, refer to the descriptions in the first aspect. Details are not described herein again.

In some implementations of the third aspect, the sending the first audio format information and the second audio format information includes: sending the first audio format information and the second audio format information to the second communication entity; and the receiving the fifth audio format information and the sixth audio format information includes: receiving the fifth audio format information and the sixth audio format information from the second communication entity.

In some implementations of the third aspect, the fifth audio format information and the sixth audio format information are sent to the first communication entity.

In some implementations of the third aspect, the sending the first audio format information and the second audio format information to the second communication entity includes: sending a first request message to the second communication entity, where the first request message is an invite invite request message or a re-invite re-invite request message, and the first request message includes the first audio format information and the second audio format information; and the receiving the fifth audio format information and the sixth audio format information from the second communication entity includes: receiving a response message of the first request message from the second communication entity, where the response message includes the fifth audio format information and the sixth audio format information.

In some implementations of the third aspect, the second communication entity is a called terminal device, and the first communication entity is an internet protocol multimedia subsystem access gateway.

In some implementations of the third aspect, the sending the first audio format information and the second audio format information to the second communication entity includes: sending a first response message to the second communication entity, where the first response message is a 18X response message or a 200 response message, the first response message includes the first audio format information and the second audio format information, and the 18X response message is a 180 response message or a 183 response message; and the receiving the fifth audio format information and the sixth audio format information from the second communication entity includes: receiving an acknowledgment message of the first response message from the second communication entity, where the acknowledgment message includes the fifth audio format information and the sixth audio format information.

In some implementations of the third aspect, the second communication entity is a calling terminal device, and the first communication entity is an internet protocol multimedia subsystem access gateway.

In some implementations of the third aspect, any one of the first audio format information to the sixth audio format information correspondingly includes an indicated type of the audio format and an indicated rate of the audio format.

In some implementations of the third aspect, types of audio formats supported by an IVAS codec include mono, stereo, multi-channel, objects, first-order ambisonics FOA, higher-order ambisonics HOA, and metadata-assisted spatial audio MASA. In some implementations of the third aspect, the audio format includes an audio format type and a rate set corresponding to the audio format type.

According to a fourth aspect, an audio parameter negotiation method is provided. The method may be performed by a first communication entity, or may be performed by a component (for example, a chip or a circuit) of the first communication entity.

The method includes: receiving fifth audio format information and sixth audio format information, where the fifth audio format information indicates at least one fifth audio format, the sixth audio format information indicates at least one sixth audio format, the fifth audio format is an audio format to be used by the first communication entity for immersive voice and audio services IVAS decoding and/or by a second communication entity for IVAS encoding, and the sixth audio format is an audio format to be used by the first communication entity for IVAS encoding and/or the second communication entity for IVAS decoding; and performing audio data transmission with the second communication entity based on the fifth audio format information and the sixth audio format information.

For beneficial effects of the fourth aspect, refer to the descriptions in the first aspect. Details are not described herein again.

In some implementations of the fourth aspect, the performing audio data transmission with the first communication entity based on the fifth audio format information and the sixth audio format information includes: receiving first audio data from the second communication entity; and performing IVAS decoding on the first audio data based on the fifth audio format information.

In some implementations of the fourth aspect, the performing audio data transmission with the first communication entity based on the fifth audio format information and the sixth audio format information includes: sending second audio data to the second communication entity, where the second audio data is generated by performing IVAS encoding based on the sixth audio format information.

In some implementations of the fourth aspect, the receiving the fifth audio format information and the sixth audio format information includes: receiving the fifth audio format information and the sixth audio format information from a third communication entity.

In some implementations of the fourth aspect, the third communication entity is a proxy-call session control function network element, the second communication entity is a called terminal device, and the first communication entity is an internet protocol multimedia subsystem access gateway; or the third communication entity is a proxy-call session control function network element, the second communication entity is a calling terminal device, and the first communication entity is an internet protocol multimedia subsystem access gateway.

In some implementations of the fourth aspect, the fifth audio format information or the sixth audio format information correspondingly includes an indicated type of the audio format and an indicated rate of the audio format.

In some implementations of the fourth aspect, types of audio formats supported by an IVAS codec include mono, stereo, multi-channel, objects, first-order ambisonics FOA, higher-order ambisonics HOA, and metadata-assisted spatial audio MASA. In some implementations of the fourth aspect, the audio format includes an audio format type and a rate set corresponding to the audio format type.

According to a fifth aspect, an audio parameter negotiation method is provided. The method may be performed by a third communication entity, or may be performed by a component (for example, a chip or a circuit) of the third communication entity.

The method includes: receiving first audio format information and second audio format information, where the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding; and sending fifth audio format information and sixth audio format information based on the first audio format information, the second audio format information, third audio format information, and fourth audio format information, where the third audio format information indicates at least one third audio format, the fourth audio format information indicates at least one fourth audio format, the third audio format is an audio format available to a second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

In some implementations of the fifth aspect, the receiving the first audio format information and the second audio format information includes: receiving the first audio format information and the second audio format information from the first communication entity; and the sending the fifth audio format information and the sixth audio format information includes: sending the fifth audio format information and the sixth audio format information to the first communication entity and the second communication entity

In some implementations of the fifth aspect, the receiving the first audio format information and the second audio format information from the first communication entity includes: receiving a first request message from the first communication entity, where the first request message is an invite invite request message or a re-invite re-invite request message, and the first request message includes the first audio format information and the second audio format information; and sending the fifth audio format information and the sixth audio format information to the first communication entity includes: sending a response message of the first request message to the first communication entity, where the response message includes the fifth audio format information and the sixth audio format information.

In some implementations of the fifth aspect, the third communication entity is a proxy-call session control function network element, the first communication entity is a calling terminal device, and the second communication entity is an internet protocol multimedia subsystem access gateway.

According to a sixth aspect, a communication apparatus is provided. The apparatus is configured to perform the method provided in the first aspect. Specifically, the apparatus may include a unit and/or a module configured to perform the method in any one of the possible implementations of the first aspect, for example, a processing unit and/or a communication unit.

According to a seventh aspect, a communication apparatus is provided. The apparatus is configured to perform the method provided in the second aspect or the fourth aspect. Specifically, the apparatus may include a unit and/or a module configured to perform the method according to any one of the second aspect or the fourth aspect or the possible implementations of the second aspect or the fourth aspect, for example, a processing unit and/or a communication unit.

According to an eighth aspect, a communication apparatus is provided. The apparatus is configured to perform the method provided in the third aspect or the fifth aspect. Specifically, the apparatus may include a unit and/or a module configured to perform the method according to any one of the third aspect or the fifth aspect or the possible implementations of the third aspect or the fifth aspect, for example, a processing unit and/or a communication unit.

According to a ninth aspect, a communication apparatus is provided, including a processor. The processor is coupled to a memory, and may be configured to execute instructions in the memory, to implement the method in any one of the first aspect or the possible implementations of the first aspect. Optionally, the apparatus further includes the memory. Optionally, the apparatus further includes a communication interface, and the processor is coupled to the communication interface.

In an implementation, the apparatus is a second communication entity. When the apparatus is the second communication entity, the communication interface may be a transceiver or an input/output interface.

In another implementation, the apparatus is a chip disposed in the second communication entity. When the apparatus is the chip disposed in the second communication entity, the communication interface may be an input/output interface.

Optionally, the transceiver may be a transceiver circuit. Optionally, the input/output interface may be an input/output circuit.

According to a tenth aspect, a communication apparatus is provided, including a processor. The processor is coupled to a memory, and may be configured to execute instructions in the memory, to implement the method in any one of the second aspect or the fourth aspect or the possible implementations of the second aspect or the fourth aspect. Optionally, the apparatus further includes the memory. Optionally, the apparatus further includes a communication interface, and the processor is coupled to the communication interface.

In an implementation, the apparatus is a first communication entity. When the apparatus is the first communication entity, the communication interface may be a transceiver or an input/output interface.

In another implementation, the apparatus is a chip disposed in the first communication entity. When the apparatus is the chip disposed in the first communication entity, the communication interface may be an input/output interface.

Optionally, the transceiver may be a transceiver circuit. Optionally, the input/output interface may be an input/output circuit.

According to an eleventh aspect, a communication apparatus is provided, including a processor. The processor is coupled to a memory, and may be configured to execute instructions in the memory, to implement the method in any one of the third aspect or the fifth aspect or the possible implementations of the third aspect or the fifth aspect. Optionally, the apparatus further includes the memory. Optionally, the apparatus further includes a communication interface, and the processor is coupled to the communication interface.

In an implementation, the apparatus is a third communication entity. When the apparatus is the third communication entity, the communication interface may be a transceiver or an input/output interface.

In another implementation, the apparatus is a chip disposed in the third communication entity. When the apparatus is the chip disposed in the third communication entity, the communication interface may be an input/output interface.

Optionally, the transceiver may be a transceiver circuit. Optionally, the input/output interface may be an input/output circuit.

According to a twelfth aspect, a computer-readable storage medium is provided. The computer-readable medium stores program code to be executed by a device, and the program code is used to perform the method provided in any one of the first aspect to the fourth aspect.

According to a thirteenth aspect, a computer program product including instructions is provided. When the computer program product is run on a computer, the computer is caused to perform the method provided in any one of the first aspect to the fourth aspect.

According to a fourteenth aspect, a chip is provided. The chip includes a processor and a communication interface. The processor reads, through the communication interface, instructions stored in a memory, to perform the method provided in any one of the first aspect to the fourth aspect.

Optionally, in an implementation, the chip may further include the memory. The memory stores instructions. The processor is configured to execute the instructions stored in the memory. When the instructions are executed, the processor is configured to perform the method provided in any one of the first aspect to the fourth aspect.

According to a fifteenth aspect, a communication system is provided. The communication system includes at least one of the second communication entity configured to perform the method according to the first aspect, the first communication entity configured to perform the method according to the second aspect or the fourth aspect, and the third communication entity configured to perform the method according to the third aspect or the fifth aspect.

**BRIEF DESCRIPTION OF DRAWINGS**

FIG. 1 is a diagram of a communication system applicable to a method according to an embodiment of this application;
FIG. 2 is a diagram of a communication system applicable to a method according to an embodiment of this application;
FIG. 3 is a diagram of a method 300 for performing speech codec negotiation between calling and called parties;
FIG. 4 is a diagram of an audio parameter negotiation method 400 according to an embodiment of this application;
FIG. 5 is a diagram of an audio parameter negotiation method 500 according to an embodiment of this application;
FIG. 6 is a diagram of an audio parameter negotiation method 600 according to an embodiment of this application;
FIG. 7 is a diagram of an audio parameter negotiation method 700 according to an embodiment of this application;
FIG. 8 is a diagram of an audio parameter negotiation method 800 according to an embodiment of this application;
FIG. 9 is a diagram of an audio parameter negotiation method 900 according to an embodiment of this application;
FIG. 10 is a diagram of a communication apparatus 1100 according to an embodiment of this application; and
FIG. 11 is a diagram of another communication apparatus 1200 according to an embodiment of this application.

**DESCRIPTION OF EMBODIMENTS**

To make objectives, technical solutions, and advantages of this application clearer, the following further describes this application in detail with reference to the accompanying drawings.
Before embodiments of this application are described, the following several descriptions are first provided.

1. In the descriptions of embodiments of this application, unless otherwise specified, "a plurality of" means two or more.

2. In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment.

3. Various numerals in this application are for differentiation merely for ease of description, but are not for limiting the scope of this application. Sequence numbers in this application do not mean an execution sequence. The execution sequence of processes should be determined based on functions and internal logic of the processes. For example, in the specification, claims, and accompanying drawings of this application, the terms "first", "second", "third", "fourth", and various other term numerals (if existent) are intended to distinguish between similar objects but do not necessarily indicate a specific order or sequence. It should be understood that, the data termed in such a way is interchangeable in proper circumstances, so that embodiments described herein can be implemented in a sequence other than the sequence illustrated or described herein.

4. The terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to such a process, method, product, or device.

5. "Sending" and "receiving" in embodiments of this application indicate signal transfer directions. For example, "sending information to XX" may be understood as that a target end of the information is the XX, and may include direct sending through an air interface, or include indirect sending through an air interface by another unit or module. "Receiving information from YY" may be understood as that a source end of the information is YY, and may include directly receiving the information from YY through an air interface, or may include indirectly receiving the information from YY from another unit or module through an air interface. "Sending" may also be understood as "outputting" of a chip interface, and "receiving" may also be understood as "inputting" of the chip interface.

In other words, sending and receiving may be performed between devices, for example, between a terminal device #1 and a terminal device #2, or may be performed in a device, for example, sending or receiving is performed between components, modules, chips, software modules, or hardware modules in a device through a bus, a cable, or an interface.

6. In embodiments of this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information.

Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.

7. In this application, "preconfigured" may include being predefined, for example, defined in a protocol. "Being predefined" may be implemented by prestoring corresponding code or a corresponding table in a device (for example, including network elements) or in another manner that may indicate related information. A specific implementation thereof is not limited in this application.

8. "Storage" or "store" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

9. A "protocol" in embodiments of this application may be a standard protocol in the communication field, for example, may include a 4th generation (4th generation, 4G) network/5th generation (5th generation, 5G) network protocol, a new radio (new radio, NR) protocol, and a related protocol applied to a future communication system. This is not limited in this application.

10. Arrows or blocks shown by dashed lines in the diagrams of the accompanying drawings in the specification of this application indicate optional steps or optional modules.

The technical solutions provided in this application may be applied to various communication systems, for example, a 5th generation (5th generation, 5G) communication system (which is also referred to as a new radio (new radio, NR) system), a 4th generation (4th generation, 4G) communication system (which is also referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

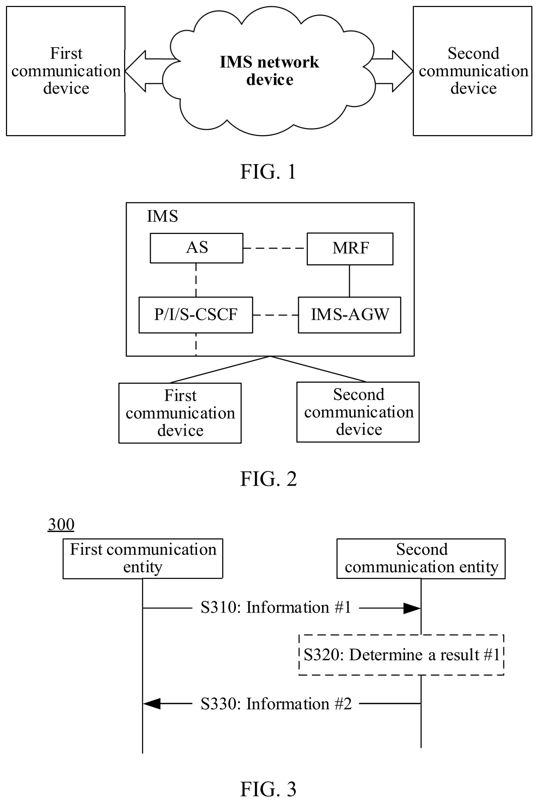

FIG. 1 is a diagram of a communication system applicable to a method according to an embodiment of this application. It should be understood that the communication system described in this application is merely an example, and should not constitute any limitation on this application.

In the communication system shown in FIG. 1, a first communication device and a second communication device communicate with each other through an IP multimedia subsystem (IP multimedia subsystem, IMS) network. The first communication device and the second communication device may be any electronic device having a voice interaction capability.

For example, the first communication device or the second communication device is user equipment (user equipment, UE). The UE may be any device that can access a network, and may also be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, a user apparatus, or the like. The UE may be a device that provides a voice/data connectivity for a user, for example, a handheld device or a vehicle-mounted device that has a wireless connection function. Currently, some examples of the terminal may be: a mobile phone (mobile phone), a tablet computer (pad), a computer having a wireless receiving/sending function (for example, a notebook computer or a palmtop computer), a mobile internet device (mobile internet device, MID), a virtual reality (virtual reality, VR) device, an AR device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or computing device having a wireless communication function, another processing device connected to a wireless modem, a vehicle-mounted device, a wearable device, a terminal device in a 4G/5G network, a terminal device in a future evolved public land mobile communication network (public land mobile network, PLMN), and the like. In addition, the UE may alternatively be UE in an internet of things (Internet of things, IoT) system. IoT is an important component of future information technology development. A main technical feature of IoT is to connect things to a network by using a communication technology, to implement a smart network for human-machine interconnection and thing-thing interconnection. The IoT technology can implement massive connections, deep coverage, and terminal power saving by using, for example, a narrow band (narrow band, NB) technology. In addition, the UE may alternatively include an intelligent printer, a train detector, and the like, and main functions of the terminal device include: collecting data (which is a function of some terminal devices), receiving control information and downlink data of a network device, sending an electromagnetic wave, and transmitting uplink data to the network device.

For another example, the first communication device or the second communication device is a network device in a communication network, for example, an application server.

In an example, the first communication device is a calling device (namely, a device that initiates a call), and the second communication device is a called device (namely, a device that is called). In another example, the first communication device is a called device, and the second communication device is a calling device.

In an example, the IMS network includes an IMS core network (IMS Core) and an application server (application server, AS). The first communication device and the second communication device may be connected to the AS via the IMS core. The IMS core includes a call session control function (call session control function, CSCF) network element and an IMS access media gateway (access media gateway, AGW). A specific architecture is shown in FIG. 2. It may be understood that the IMS network may further include another network device, for example, further include a media resource function (media resource function, MRF) network element. This is not limited in this application. The following sequentially describes network elements in the IMS network by using examples.

1. CSCF network element: A CSCF is a functional entity inside an IMS, and is a core of the entire IMS. The CSCF is mainly responsible for processing signaling control in a multimedia call session process. The CSCF manages user authentication of the IMS and quality of service (quality of service, QoS) on an IMS bearer-plane, cooperates with another network element to perform control on a session initiation protocol (session initiation protocol, SIP) session, service negotiation, resource allocation, and the like. For ease of description, the CSCF network element in this application is referred to as the "CSCF".

The CSCF may communicate with the terminal device, and the CSCF may communicate with a gateway device. For example, the CSCF may select a gateway device that communicates with the terminal device. In addition, the CSCF may allocate routing information, for example, an IP address or a port, to the terminal device and the gateway device.

By way of example, and not limitation, the CSCF is classified into a proxy-CSCF (proxy-CSCF, P-CSCF), an interrogating-CSCF (interrogating-CSCF, I-CSCF), a serving-CSCF (serving-CSCF, S-CSCF), and the like based on functions.

The P-CSCF is an ingress node for a user to access the IMS network, and is mainly responsible for forwarding SIP signaling between the IMS user and a home network. The I-CSCF is a unified entry point for the IMS user to the home network, and is responsible for allocating or querying the S-CSCF that serves the user. The S-CSCF is a unified entry point for the IMS user to the home network, and is responsible for allocating or querying the S-CSCF that serves the user.

It may be understood that the P-CSCF, the S-CSCF, and the I-CSCF may be independently disposed in different entities, or may be integrated into a same entity. This is not limited in this application.

2. IMS-access media gateway (access media gateway, AGW): The IMS-AGW may provide functions of an IMS network access gateway and media gateway.

It may be understood that the CSCF and the IMS-AGW may be collectively referred to as an IMS core. A manner of signaling exchange between network elements in the IMS core is not limited in this application.

3. AS: The AS is an application layer device at an upper layer of an IMS system. The AS provides basic services and supplementary services, such as a multimedia conference, a video ring back tone, a video ring tone, converged communication, a short message service gateway, and a standard attendant console.

4. MRF network element: controls and processes media resources, and serves an AS service procedure. The AS can control the MRF to implement functions such as announcement playback, digit collection, and a conference.

The foregoing network architecture applied to embodiments of this application is merely an example, and a network architecture applicable to embodiments of this application is not limited thereto. Any network architecture that can implement functions of the foregoing network elements is applicable to embodiments of this application. That is, the network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

It may be further understood that the network elements or the devices listed in the foregoing network architecture are merely examples for description, and the network architecture applicable to this application may further include another network element or device. This is not limited in this application.

It may be further understood that the names of the foregoing network elements or devices are defined merely for distinguishing between different functions, and should not constitute any limitation on this application. This application does not exclude a possibility that another name is used in the 4G network, the 5G network, and another future network. For example, in a 6G network, some or all of the foregoing network elements may still use terms in 4G/5G, or may use other names.

An IVAS speech codec is a brand-new immersive speech codec. Compared with conventional speech codecs, the IVAS speech codec supports more audio formats, and additionally includes rendering features to provide a better voice call experience. Parameters corresponding to an audio format supported by the IVAS speech codec include a type of the audio format and a rate available for the type of the audio format. For example, according to the complexity of the audio format types from low to high, the audio format types include mono (mono), stereo (stereo), multi-channel (multi-channel), objects (objects), first-order ambisonics (first-order ambisonics, FOA), higher-order ambisonics (higher-order ambisonics, HOA), metadata-assisted spatial audio (metadata-assisted spatial audio, MASA), and the like. Multi-channel can support up to a 7.1.4 channel format, that is, 12 channels, and HOA supports up to a 3rd order, that is, 16 channels. In addition, the IVAS speech codec supports a rate range from 5.9 kbps for mono to 768 kbps for 3rd order HOA. In addition, the IVAS speech codec supports rendering of various audio formats to binaural and standard speaker arrays.

More signal channels, a larger rate range, and additional rendering characteristics make calculation complexity and storage complexity of the IVAS codec significantly higher than those of conventional speech codecs. In a design of an IVAS speech codec standard, three different complexity levels are specified: a level 1 (less than three times of EVS computational complexity), a level 2 (less than six times of EVS computational complexity), and a level 3 (less than 10 times of EVS computational complexity). For ease of description, in this application, the level 1, the level 2, and the level 3 are respectively referred to as L1, L2, and L3. L1 supports encoding and decoding of audio formats corresponding to mono, stereo, FOA, and MASA, L2 further supports encoding and decoding of audio formats corresponding to multi-channel and objects based on L1, and L3 further supports encoding and decoding of audio formats corresponding to maximum 3rd order HOA based on L2.

FIG. 3 is a diagram of a method 300 for performing speech codec negotiation between calling and called parties. During establishment of a voice call, calling and called parties need to perform speech codec negotiation, and parameters participating in the speech codec negotiation mainly include a speech codec type and a rate. As shown in FIG. 3, the method 300 includes the following steps.

S310: A first communication entity sends information #1 to a second communication entity. Correspondingly, the second communication entity receives the information #1 from the first communication entity.

The information #1 carries parameters such as a speech codec type (for example, AMR or EVS) supported by the first communication entity and a corresponding rate.

S320: The second communication entity determines a result #1 based on a speech codec capability of the second communication entity.

The result #1 includes a speech codec type supported by both the first communication entity and the second communication entity and corresponding rate information.

For example, the first communication entity may be considered as an offerer (offer), and the second communication entity may be considered as an answerer (answerer).

S330: The second communication entity sends information #2 to the first communication entity, where the information #2 includes the result #1. Correspondingly, the first communication entity receives the information #2 from the second communication entity.

Currently, when negotiating speech codec parameters, a terminal #1 and a terminal #2 negotiate only a codec type and a rate. In a possible scenario, the terminal #1 and the terminal #2 determine that a speech codec type used in subsequent audio communication is an IVAS speech codec. Because the IVAS speech codec is a complex codec that supports a plurality of audio formats, on a basis of determining to use the IVAS codec, how to negotiate an IVAS codec audio format at a finer granularity becomes an urgent problem to be resolved.

In view of this, this application provides an audio parameter negotiation method, to effectively resolve the foregoing technical problem. The following describes in detail the method provided in embodiments of this application with reference to the accompanying drawings.

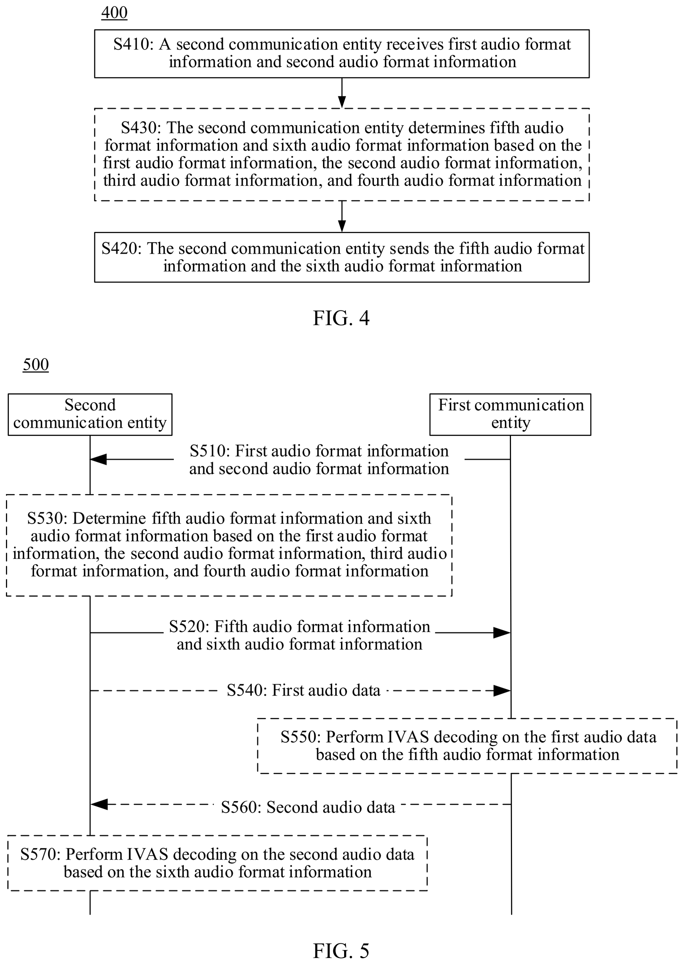

FIG. 4 is a diagram of an audio parameter negotiation method 400 according to an embodiment of this application. The method 400 may include the following steps.

S410: A second communication entity receives first audio format information and second audio format information. The first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding.

For example, in this embodiment of this application, an example in which parameters corresponding to one audio format include one type of the audio format (which may be referred to as an audio format type below) and one rate is used for description. For example, if audio format parameters corresponding to an audio format #1 include {FOA, 24}, it indicates that an audio format type corresponding to the audio format #1 is FOA, and a rate supported by FOA is 24 kbps.

It should be understood that, in this embodiment of this application, a unit of the rate supported by the audio format type is kbps, and details are not described one by one below.

Based on the foregoing example, the at least one first audio format indicated by the first audio format information may correspond to a same audio format type or different audio format types. For example, if the first audio format information indicates three first audio formats, audio format parameters corresponding to the three first audio formats are respectively {MONO, 5.9}, {MONO, 7.2} and {MONO, 9.6}, audio format parameters corresponding to the three first audio formats are respectively {MONO, 5.9}, {MONO, 7.2}, {FOA, 24}, or audio format parameters corresponding to the three first audio formats are respectively {MONO, 5.9}, {STEREO, 13}, {FOA, 24}. This is not specifically limited in this application. Similarly, the at least one second audio format indicated by the second audio format information may correspond to a same audio format type or different audio format types. Examples are not listed one by one herein.

For ease of description, in this embodiment of this application, an audio format available to a communication entity #1 for IVAS encoding is referred to as an IVAS encoding audio format supported by the communication entity #1, and an audio format available to the communication entity #1 for IVAS decoding is referred to as an IVAS decoding audio format supported by the communication entity #1.

The following uses examples to describe a manner of indicating the first audio format information and the second audio format information.

Example 1: The first audio format information and the second audio format information may be indicated by using a table shown in Table 1.

It should be noted that, actually, because codec computing power of the first communication entity is limited, only a fixed combination of an encoding audio format and a decoding audio format that are supported by the first communication entity is provided. A combination 1, a combination 2, and a combination 3 in Table 1 may be considered as three groups of audio format information, and each group of audio format information includes corresponding first audio format information and second audio format information. Herein, the combination 1 is used as an example to describe meanings of parameters in Table 1. Parameter information (namely, an example of the first audio format information) corresponding to encoding audio formats in the combination 1 indicates nine encoding audio formats (namely, an example of nine first audio formats). Parameter information (namely, an example of the second audio format information) corresponding to decoding audio formats in the combination 1 indicates three decoding audio formats (namely, an example of three second audio formats). Audio format types of the three decoding audio formats are all MONO, and respectively support rates of 5.9, 7.2, and 9.6. In the nine encoding audio formats, audio format types of the three encoding audio formats are all MONO, audio format types of the other three encoding audio formats are all STEREO, and audio format types of the remaining three encoding audio formats are FOA, where rates supported by MONO are 5.9, 7.2, and 9.6 respectively, rates supported by STEREO are 13.2, 24, and 32 respectively, and rates supported by FOA are 24, 32, and 48 respectively.

Table 1

| | Combination 1 | Combination 2 | Combination 3 |
|---|---|---|---|
| Parameters corresponding to a decoding audio format | MONO | STEREO | FOA |
| | {5.9, 7.2, 9.6} | {13.2, 24, 32} | {24, 32, 48} |
| Parameters corresponding to an encoding audio format | MONO | MONO | MONO |
| | {5.9, 7.2, 9.6} | {5.9, 7.2, 9.6} | {5.9, 7.2, 9.6} |
| | STEREO | STEREO | STEREO |
| | {13.2, 24, 32} | {13.2, 24, 32} | {13.2, 24, 32} |
| | FOA | FOA | |
| | {24, 32, 48} | {24} | |

A reason why only the fixed combination of the encoding audio format and the decoding audio format is provided is described herein with reference to Table 1. There are three types of decoding audio format types supported by the first communication entity: MONO in the combination 1, STEREO in the combination 2, and FOA in the combination 3, where a rate set supported by decoding MONO is {5.9, 7.2, 9.6}, a rate set supported by decoding STEREO is {13.2, 24, 32}, and a rate set supported by decoding FOA is {24, 32, 48}. It can be learned that, when the decoding audio format type supported by the first communication entity in the combination 1 is MONO, there are three types of encoding audio format types that can be supported by the first communication entity: MONO, STEREO, and FOA, maximum rates respectively supported by the three types of the audio format types are 9.6 kbps, 32 kbps, and 48 kbps respectively. When the type of the decoding audio format supported by the first communication entity in the combination 2 is STEREO, there are still three types of the encoding audio format types that can be supported by the first communication entity: MONO, STEREO, and FOA. However, because overheads for decoding STEREO are greater than those for decoding MONO, remaining computing power for encoding decreases. In this case, a rate for encoding FOA cannot reach 48 kbps, and a supported maximum rate can only reach 24 kbps (A higher rate indicates larger overheads). When the type of the decoding audio format supported by the first communication entity in the combination 3 is FOA, because there are larger overheads for decoding FOA, less computing power is left for encoding than that in the combination 2, and the remaining computing power cannot support encoding FOA. In this case, only two types of the encoding audio format types: MONO and STEREO that can be supported by the first communication entity are left, and supported maximum rates are 9.6 kbps and 32 kbps respectively. It can be learned from the foregoing descriptions that a codec combination of audio formats is limited by the codec computing power of the first communication entity. If encoding overheads are large, decoding overheads need to be reduced, and vice versa.

Example 2: The first audio format information and the second audio format information may be jointly indicated by using tables shown in Table 2 and Table 3.

As shown in Table 2, a combination 1, a combination 2, and a combination 3 are included in Table 2. Herein, the combination 1 is used as an example to describe meanings of parameters in Table 1. The combination 1 includes one decoding audio format type MONO and three encoding audio format types MONO, STEREO, and FOA that are supported by the first communication entity, where a maximum rate supported by decoding MONO is 9.6, a maximum rate supported by encoding MONO is 9.6, a maximum rate supported by encoding STEREO is 32, and a rate set supported by encoding FOA is 48. Interpretation manners of meanings of parameters in the combination 2 and the combination 3 in Table 2 are the same as those in the combination 1, and details are not described herein again.

For example, in this application, any one of the combination 1, the combination 2, and the combination 3 may be understood as a combination of IVAS codec audio formats supported by the first communication entity.

Table 2

| | Combination 1 | Combination 2 | Combination 3 |
|---|---|---|---|
| Decoding audio format type and corresponding maximum rate | MONO | STEREO | FOA |
| | 9.6 | 32 | 48 |
| Encoding audio format type and corresponding maximum rate | MONO | MONO | MONO |
| | 9.6 | 9.6 | 9.6 |
| | STEREO | STEREO | STEREO |
| | 32 | 32 | 32 |
| | FOA | FOA | |
| | 48 | 24 | |

Table 3 lists rate information supported by MONO, STEREO, and FOA. As shown in Table 3, all rates supported by MONO are {5.9, 7.2, 9.6, 13.2}, all rates supported by STEREO are {13.2, 24, 32}, and all rates supported by FOA are {24, 32, 48}.

It should be understood that the rates supported by MONO, STEREO, and FOA in Table 3 are preconfigured rates supported by MONO, STEREO, and FOA, and the corresponding maximum rate in Table 2 is a maximum rate that can be actually supported by the first communication entity in the corresponding combination.

Table 3

| Audio format type | Supported rate | | |
|---|---|---|---|
| MONO | 5.9 | 7.2 | 9.6 |
| STEREO | 13.2 | 24 | 32 |
| FOA | 24 | 32 | 48 |

In this case, rate sets corresponding to all encoding audio format types and all decoding audio format types in Table 2 may be determined based on both Table 2 and Table 3, that is, a first capability may be determined based on both Table 2 and Table 3. For example, if a maximum rate supported by decoding MONO in the combination 1 in Table 2 is 9.6, and all the rates that can be supported by MONO in Table 3 are {5.9, 7.2, 9.6, 13.2}, rates that can be actually supported by decoding MONO in the combination 1 are {5.9, 7.2, 9.6}. For another example, if a maximum rate supported by encoding FOA in the combination 2 in Table 2 is 24, and all the rates that can be supported by FOA in Table 3 are {24, 32, 48}, a rate that can be actually supported by encoding FOA in Table 2 is {24}.

For example, it may be understood that the rates that can be actually supported by decoding MONO in the combination 1 are {5.9, 7.2, 9.6}, indicating that the first communication entity supports three encoding audio formats, and parameters corresponding to the three encoding audio formats are {MONO, 5.9}, {MONO, 7.2} and {MONO, 9.6}.

It can be learned that, in Example 2, the first audio format information and the second audio format information are jointly indicated by using Table 2 and Table 3, and compared with Table 1 in Example 1, all rates actually supported by each audio format type do not need to be indicated, so that signaling overheads can be reduced.

S420: The second communication entity sends fifth audio format information and sixth audio format information based on the first audio format information, the second audio format information, third audio format information, and fourth audio format information.

The fifth audio format information indicates at least one fifth audio format, the sixth audio format information indicates at least one sixth audio format, the third audio format information and the fourth audio format information include the third audio format information and the fourth audio format information, the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

It may be understood that the first audio format information and the second audio format information reflect an IVAS codec capability of the first communication entity, and the third audio format information and the fourth audio format information reflect an IVAS codec capability of the second communication entity.

The third audio format information and the fourth audio format information may alternatively be indicated in a manner corresponding to the two examples of the first audio format information and the second audio format information in S410. Details are not described herein again.

For example, because the first audio format information and the second audio format information are information sent to the second communication entity for audio parameter negotiation, the first audio format information and the second audio format information in this embodiment of this application may also be referred to as audio parameter proposal information. Similarly, because the fifth audio format information and the sixth audio format information are determined based on the first audio format information and the second audio format information, the fifth audio format information and the sixth audio format information in this embodiment of this application may also be referred to as audio parameter response information.

It should be understood that the fifth audio format information and the sixth audio format information are an audio parameter negotiation result obtained based on the audio formats supported by the first communication entity and the second communication entity, and the first communication entity and the second communication entity then perform audio data transmission based on the audio parameter negotiation result. Details are not described herein. The following specifically describes how the first communication entity and the second communication entity use the audio parameter negotiation result in audio communication.

It may be understood that, that the fifth audio format is an audio format to be used by the first communication entity for IVAS decoding and/or the second communication entity for IVAS encoding includes the following three descriptions: 1. The fifth audio format is the audio format to be used when the first communication entity performs IVAS decoding; 2. The fifth audio format is the audio format to be used when the second communication entity performs IVAS encoding; and 3. The fifth audio format is the audio format to be used when the first communication entity performs IVAS decoding and the second communication entity performs IVAS encoding. Because the fifth audio format and the sixth audio format are the audio parameter negotiation result corresponding to the first communication entity and the second communication entity, it may be considered that the first description implies that the fifth audio format indicates the audio format to be used when the second communication entity performs IVAS encoding, and it may be considered that the second description implies that the fifth audio format indicates the audio format to be used when the first communication entity performs IVAS decoding.

Similarly, that the sixth audio format indicates the audio format to be used when the first communication entity performs IVAS encoding and/or the audio format to be used when the second communication entity performs IVAS decoding also has similar understandings, and details are not described herein again.

Optionally, the at least one fifth audio format is an intersection set of the at least one second audio format and the at least one third audio format; and the at least one sixth audio format is an intersection set of the at least one first audio format and the at least one fourth audio format. The following uses examples in which parameters corresponding to audio formats include types and rates of the audio formats to describe an intersection set of three second audio formats and four third audio formats.

Example 1: Audio format parameters corresponding to the three second audio formats are respectively {MONO, 5.9}, {MONO, 7.2}, and {MONO, 9.6}, and parameters corresponding to the four third audio formats are respectively {MONO, 5.9}, {MONO, 7.2}, {MONO, 9.6} and {STEREO, 13.2}. In this example, an intersection set of the three second audio formats and the four third audio formats is three fifth audio formats, and parameters corresponding to the three fifth audio formats are respectively {MONO, 5.9}, {MONO, 7.2} and {MONO, 9.6}.

Example 2: Audio format parameters corresponding to the three second audio formats are respectively {MONO, 5.9}, {MONO, 7.2}, and {STEREO, 13.2}, and parameters corresponding to the four third audio formats are respectively {MONO, 5.9}, {MONO, 7.2}, {STEREO, 13.2} and {STEREO, 24}. In this example, an intersection set of the three second audio formats and the four third audio formats is three fifth audio formats, and parameters corresponding to the three fifth audio formats are respectively {MONO, 5.9}, {MONO, 7.2} and {STEREO, 13.2}.

For the at least one sixth audio format being the intersection set of the at least one first audio format and the at least one fourth audio format, refer to the foregoing descriptions. Examples are not described one by one herein.

It should be noted that an audio format type of the at least one fifth audio format may be the same, or an audio format type of the at least one fifth audio format may not be completely the same. For example, audio format types of the three fifth audio formats obtained in Example 1 are all MONO, and audio format types of the three fifth audio formats obtained in Example 2 are not completely the same, where the audio format types of the two fifth audio formats are MONO, and the remaining fifth audio format type is STEREO.

In a possible scenario, when the audio format type of the at least one fifth audio format is the same, for example, MONO, the second communication entity can perform IVAS encoding only based on MONO, and the first communication entity can perform decoding only based on MONO. In Example 1, because the audio format types of the three fifth audio formats are all MONO, the second communication entity may perform, based on one of the three fifth audio formats, IVAS encoding on speech content to be sent to the first communication entity, to generate audio data #1, and send the audio data #1 to the first communication entity. Correspondingly, the second communication entity receives the audio data #1 from the first communication entity, and performs IVAS decoding on the audio data #1 based on MONO.

For example, the second communication entity may perform IVAS encoding based on one fifth audio format selected from the three fifth audio formats in a current network environment.

In another possible scenario, when the audio format type of the at least one fifth audio format is not completely the same, for example, the second communication entity may perform IVAS encoding based on an audio format type with highest complexity of the audio format type in the at least one fifth audio format, and the first communication entity may perform IVAS encoding based on the audio format type with highest complexity of the audio format type in the at least one fifth audio format. For example, in Example 2, audio format types of the three fifth audio formats are not completely the same, and an audio format type with highest complexity of the audio format type in the three fifth audio formats is STEREO. In this case, the second communication entity may perform, based on the fifth audio format corresponding to {STEREO, 13.2}, IVAS encoding on speech content to be sent to the first communication entity, to generate audio data #1, and send the audio data #1 to the first communication entity. Correspondingly, the second communication entity receives the audio data #1 from the first communication entity, and performs IVAS decoding on the audio data #1 based on the fifth audio format corresponding to {STEREO, 13.2}.

It should be noted that an audio format type of the at least one sixth audio format may be the same, or an audio format type of the at least one sixth audio format may not be completely the same. For specific descriptions, refer to the descriptions used when the audio format type of the at least one fifth audio format is the same or not completely the same. Examples are not described one by one herein.

In a possible implementation, in S410, that a second communication entity receives first audio format information and second audio format information includes: The second communication entity receives the first audio format information and the second audio format information from the first communication entity. In S420, that the second communication entity sends fifth audio format information and sixth audio format information includes: The second communication entity sends the fifth audio format information and the sixth audio format information to the first communication entity. A specific procedure of this implementation is described in detail in the method 500 shown in FIG. 5, and details are not described herein.

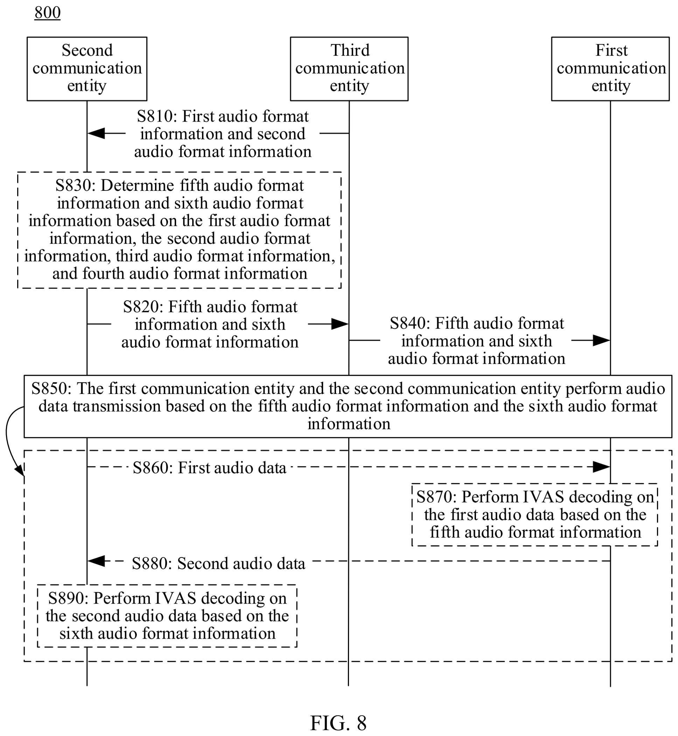

In another possible implementation, in S410, that a second communication entity receives first audio format information and second audio format information includes: The second communication entity receives the first audio format information and the second audio format information from a third communication entity. In S410, that the second communication entity sends fifth audio format information and sixth audio format information includes: The second communication entity sends the fifth audio format information and the sixth audio format information to the third communication entity. A specific procedure of this implementation is described in detail in the method 800 shown in FIG. 8, and details are not described herein.

For example, in a possible scenario, if only unidirectional audio communication is performed between the first communication entity and the second communication entity, for example, only the second communication entity can send audio data to the first communication entity between the first communication entity and the second communication entity, in S410, only the second audio format information may be carried in the first audio format information and the second audio format information, the first audio format information does not need to be carried, and in S420, the second communication entity only needs to send the fifth audio format information based on the second audio format information and the third audio format information. That is, in a unidirectional communication scenario, only the fifth audio format information or the sixth audio format information needs to be determined based on a transmission direction of the audio data between the first communication entity and the second communication entity.

Optionally, before the second communication entity sends the fifth audio format information and the sixth audio format information, the method further includes the following step:

S430: The second communication entity determines the fifth audio format information and the sixth audio format information based on the first audio format information, the second audio format information, the third audio format information, and the fourth audio format information.

For example, the second communication entity may determine the fifth audio format information and the sixth audio format information based on a first policy, the first audio format information, the second audio format information, the third audio format information, and the fourth audio format information. The first policy is performing searching from high to low according to complexity of audio format types (that is, complexity of a type of the at least one third audio format) available to the second communication entity for IVAS encoding, or the first policy is performing searching from high to low according to complexity of audio format types (that is, complexity of a type of the at least one fourth audio format) available to the second communication entity for IVAS decoding.

The following describes, with reference to specific examples, how to determine the fifth audio format information and the sixth audio format information based on the first policy. For example, the first audio format information and the second audio format information that correspond to the first communication entity are shown in Table 1, and the third audio format information and the fourth audio format information that correspond to the second communication entity are shown in Table 4. The combination 1, the combination 2, and the combination 3 in Table 1 may be considered as three groups of audio format information that are included in the first audio format information and the second audio format information include, and each group of audio format information includes corresponding first audio format information and second audio information. The combination 1, the combination 2, and the combination 3 in Table 4 may be considered as three groups of audio format information that are included in the third audio format information and the fourth audio format information, and each group of audio format information includes corresponding third audio format information and sixth audio information.

Table 4

|  | Combination 1 | Combination 2 | Combination 3 |
|---|---|---|---|
| Parameters corresponding to a decoding audio format | MONO | STEREO | FOA |
|  | {5.9, 7.2, 9.6, 13.2} | {13.2, 24, 32} | {24, 32, 48} |
| Parameters corresponding to an encoding audio format | MONO | MONO | MONO |
|  | {5.9, 7.2, 9.6} | {5.9, 7.2, 9.6} | {5.9, 7.2, 9.6, 13.2} |
|  | STEREO | STEREO | STEREO |
|  | {13.2, 24} | {13.2, 24, 32} | {13.2, 24} |
|  | FOA | FOA |  |
|  | {24, 32} | {24} |  |

Example 1: The first policy is performing searching according to the complexity of the audio format types from high to low that are available to the second communication entity for IVAS encoding, to determine the fifth audio format information and the sixth audio format information. The implementation includes the following steps.

① It can be learned from Table 4 that an encoding audio format type with highest complexity supported by the second communication entity is FOA, and it can be learned from Table 1 that the decoding audio format type of the first communication entity also includes FOA. In this case, it is temporarily determined that the encoding audio format type of the second communication entity and the decoding audio format type of the first communication entity are FOA.

Optionally, if encoding FOA exists in a plurality of combinations in Table 4, encoding FOA with a maximum rate in the combinations for encoding FOA is selected. For example, both the combination 1 and the combination 2 in Table 4 include encoding FOA, but a maximum rate 32 for encoding FOA in the combination 1 is greater than a maximum rate 24 for encoding FOA in the combination 2. Therefore, encoding FOA in the combination 1 is selected in this example.

Optionally, if decoding FOA exists in a plurality of combinations in Table 1, decoding FOA with a maximum rate in the combinations for decoding FOA is selected. In this example, in Table 1, only the combination 3 includes decoding FOA. Therefore, decoding FOA in the combination 3 is selected.

② Determine that an intersection set corresponding to the rates {24, 32} for encoding FOA supported by the second communication entity in the combination 1 in Table 4 and the rates {24, 32, 48} for decoding FOA supported by the first communication entity in the combination 3 in Table 1 is {24, 32}.

It may be understood that the fifth audio format information obtained in this example indicates two fifth audio formats, and parameters corresponding to the two fifth audio formats are respectively {FOA, 24} and {FOA, 32}.

It should be noted that, because any combination in Table 1 and Table 4 is a fixed combination, the decoding audio format type supported by the second communication entity still needs to be selected from the combination 1 in Table 4 and the encoding audio format type supported by the first communication entity needs to be selected from the combination 3 in Table 1.

③ If the decoding audio format type supported by the second communication entity in the combination 1 in Table 4 is MONO, and the encoding audio format type supported by the first communication entity in the combination 3 in Table 1 includes MONO, determine that the decoding audio format type of the second communication entity and the encoding audio format type of the first communication entity are MONO.

④ Determine that an intersection set corresponding to the rates {5.9, 7.2, 9.6, 13.2} for decoding MONO supported by the second communication entity in the combination 1 in Table 4 and the rates {5.9, 7.2, 9.6} for encoding MONO supported by the first communication entity in the combination 3 in Table 1 is {5.9, 7.2, 9.6}.

It may be understood that the sixth audio format information obtained in this example indicates three sixth audio formats, and parameters corresponding to the three sixth audio formats are respectively {MONO, 5.9}, {MONO, 7.6} and {MONO, 9.6}.

For example, if the encoding audio format type in the combination 3 in Table 1 in step 3 does not include MONO, it is considered that the sixth audio format information cannot be obtained based on the information in the combination 1 in Table 4 and the information in the combination 3 in Table 1. In this case, the second communication entity may continue to search Table 1 and Table 4 based on the first policy, until appropriate fifth audio format information and appropriate sixth audio format information are found.

Optionally, after the second communication entity searches all combinations in Table 1 and Table 4 based on the first policy in this example, if the appropriate fifth audio format information or the appropriate sixth audio format information still cannot be determined, an IVAS speech codec mode is not used between the first communication entity and the second communication entity.

Example 2: The first policy is performing searching in according to the complexity of the audio format types from high to low that are available to the second communication entity for IVAS decoding. The implementation includes the following steps.

① It can be learned from Table 4 that a decoding audio format type with highest complexity supported by the second communication entity is FOA, and it can be learned from Table 1 that the encoding audio format type of the first communication entity also includes FOA. In this case, it is temporarily determined that the decoding audio format type of the second communication entity and the encoding audio format type of the first communication entity are FOA (namely, an example of the sixth audio format type).

Optionally, if decoding FOA exists in a plurality of combinations in Table 4, decoding FOA with a maximum rate in the combinations for decoding FOA is selected. In this example, in Table 4, only the combination 3 includes decoding FOA. Therefore, decoding FOA in the combination 3 is selected.

Optionally, if encoding FOA exists in a plurality of combinations in Table 1, encoding FOA with a maximum rate in the combinations for encoding FOA is selected. For example, both the combination 1 and the combination 2 in Table 1 include encoding FOA, but a maximum rate 48 for encoding FOA in the combination 1 is greater than a maximum rate 24 for encoding FOA in the combination 2. Therefore, encoding FOA in the combination 1 is selected in this example.

② Determine that an intersection set corresponding to the rates {24, 32, 48} for decoding FOA supported by the second communication entity in the combination 3 in Table 4 and the rates {24, 32, 48} for encoding FOA supported by the first communication entity in the combination 1 in Table 1 is {24, 32, 48} (namely, an example of a second rate set).

It should be noted that, because any combination in Table 1 and Table 4 is a fixed combination, the encoding audio format type supported by the second communication entity still needs to be selected from the combination 3 in Table 4 and the decoding audio format type supported by the first communication entity needs to be selected from the combination 1 in Table 1.

③ It can be learned from Table 4 that encoding audio format types supported by the second communication entity in the combination 3 in Table 4 are MONO and STEREO, but the decoding audio format type supported by the first communication entity in the combination 1 in Table 1 includes only MONO. Therefore, it is determined that the encoding audio format type of the second communication entity and the decoding audio format type of the first communication entity are MONO (namely, an example of the fifth audio format type).

④ Determine that an intersection set corresponding to the rates {5.9, 7.2, 9.6, 13.2} for encoding MONO supported by the second communication entity in the combination 3 in Table 4 and the rates {5.9, 7.2, 9.6} for decoding MONO supported by the first communication entity in the combination 1 in Table 1 is {5.9, 7.2, 9.6} (namely, an example of the second rate set).

For example, if the encoding audio format type in the combination 1 in Table 1 in step 3 does not include MONO, it is considered that the fifth audio format type cannot be obtained based on the information in the combination 3 in Table 4 and the information in the combination 1 in Table 1. In this case, the second communication entity may continue to search Table 1 and Table 4 based on the first policy, until appropriate fifth audio format information and appropriate sixth audio format information are found.

Optionally, after the second communication entity searches all combinations in Table 1 and Table 4 based on the first policy in this example, if the appropriate fifth audio format information or the appropriate sixth audio format information still cannot be determined, an IVAS speech codec mode is not used between the first communication entity and the second communication entity.

It should be understood that the first policy provides only examples of two specific implementations of determining the fifth audio format and the sixth audio format. An implementation of determining the fifth audio format and the sixth audio format is not limited in this application. For example, the second communication entity may determine a plurality of available groups of fifth audio formats and sixth audio formats based on Table 1 and Table 4, and select an appropriate group of a fifth audio format and a sixth audio format from the plurality of groups of fifth audio formats and sixth audio formats based on an actual requirement.

In the foregoing technical solution, an IVAS speech codec negotiation mechanism with a finer granularity is provided. On a basis of using an IVAS speech codec by the first communication entity and the second communication entity, an IVAS encoding audio format and an IVAS decoding audio format that are used when the first communication entity and the second communication entity perform audio communication are further negotiated, so that the first communication entity and the second communication entity can perform audio communication based on the actually supported IVAS codec capabilities of the first communication entity and the second communication entity by using the appropriate IVAS encoding audio format and the appropriate IVAS decoding audio format.

In the method, an IVAS codec audio format is negotiated at a finer granularity, so that a waste of power consumption and bandwidths can be further avoided. The beneficial effects are specifically described. Currently, an audio format used by a terminal for IVAS encoding may be different from an audio format used by the terminal for IVAS decoding. For example, audio formats used by a terminal #1 for IVAS encoding and IVAS decoding are respectively an audio format #1 and an audio format #2, audio formats used by a terminal #2 for IVAS encoding and IVAS decoding are respectively an audio format #3 and an audio format #4. In this case, in a process in which the terminal #1 and the terminal #2 perform audio data transmission, the terminal #1 and the terminal #2 perform codec processing based on audio formats corresponding to maximum IVAS codec capabilities currently supported by the terminal #1 and the terminal #2. For example, when a maximum IVAS encoding capability of the terminal #1 is better than a maximum IVAS decoding capability of the terminal #2, the terminal #1 performs encoding processing on to-be-sent speech content based on the maximum IVAS encoding capability supported by the terminal #1, to generate audio data #1, and sends the audio data #1 to the terminal #2, and the terminal #2 can perform decoding processing on the audio data #1 only by using the maximum IVAS decoding capability of the terminal #2. Because the codec capabilities of the terminal #1 and the terminal #2 are not equal, encoding power consumption of the terminal #1 is wasted. In addition, a better IVAS encoding capability indicates more bandwidths that need to be occupied when the generated audio data is transmitted. Therefore, encoding performed based on the encoding capability of the terminal #1 further causes a waste of bandwidths. The technical problem is described by using an example in which the parameters corresponding to the audio format include the audio format type. The maximum IVAS encoding capability supported by the terminal #1 corresponds to the audio format #1, an audio format type in the audio format #1 is FOA, the maximum IVAS decoding capability supported by the terminal #2 corresponds to the audio format #4, and an audio format type in the audio format #4 is MONO. If the terminal #1 and the terminal #2 do not perform audio format negotiation, currently, the terminal #1 performs encoding based on FOA in the audio format #4 corresponding to the maximum IVAS encoding capability supported by the terminal #1, to generate audio data #1, and then sends the audio data #1 to the terminal #2. After receiving the audio data #1, the terminal #2 can perform decoding only based on MONO in the audio format #4 corresponding to the maximum IVAS decoding capability supported by the terminal #2. That is, the terminal #1 performs encoding based on a high capability, and the terminal #2 can perform decoding only based on a low capability. This wastes encoding power consumption of the terminal #1, and also wastes bandwidths. However, according to the method provided in this application, audio formats of the terminal #1 and the terminal #2 are negotiated, for example, it is determined, after the negotiation, that the terminal #1 and the terminal #2 separately perform encoding and decoding by using FOA. That is, the terminal #1 and the terminal #2 perform encoding and decoding based on a same capability, to avoid a waste of power consumption and bandwidths.

FIG. 5 is a diagram of an audio parameter negotiation method 500 according to an embodiment of this application. The method 500 may include the following steps.

S510: A first communication entity sends first audio format information and second audio format information to a second communication entity. Correspondingly, the second communication entity receives the first audio format information and the second audio format information from the first communication entity, where the first audio format information indicates at least one first audio format, the second audio format information indicates at least one second audio format, the first audio format is an audio format available to the first communication entity for immersive voice and audio services IVAS encoding, and the second audio format is an audio format available to the first communication entity for IVAS decoding.

S520: The second communication entity sends fifth audio format information and sixth audio format information to the first communication entity based on the first audio format information, the second audio format information, third audio format information, and fourth audio format information. Correspondingly, the first communication entity receives the fifth audio format information and the sixth audio format information from the second communication entity.

The fifth audio format information indicates at least one fifth audio format, the sixth audio format information indicates at least one sixth audio format, the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

For descriptions of the information or the audio formats in S510 and S520, refer to the descriptions in S410 and S420. Details are not described herein again.

It may be understood that the first audio format information and the second audio format information reflect an IVAS codec capability of the first communication entity, and the third audio format information and the fourth audio format information reflect an IVAS codec capability of the second communication entity.

Optionally, before the second communication entity sends the fifth audio format information and the sixth audio format information to the first communication entity, the method further includes the following step:

S530: The second communication entity determines the fifth audio format information and the sixth audio format information based on the first audio format information, the second audio format information, the third audio format information, and the fourth audio format information. For S530, refer to the descriptions in S430. Details are not described herein again.

It may be understood that, after S520, the first communication entity and the second communication entity determine an audio parameter negotiation result, and the first communication entity and the second communication entity may perform audio data transmission based on the audio parameter negotiation result (namely, the fifth audio format information and the sixth audio format information). The method further includes S540 and S550 and/or S560 and S570.

S540: The second communication entity sends first audio data to the first communication entity, where the first audio data is generated by performing IVAS encoding based on the fifth audio format information. Correspondingly, the first communication entity receives the first audio data from the second communication entity.

Specifically, the first audio data is generated by the second communication entity by performing IVAS encoding based on one of the at least one fifth audio format indicated by the fifth audio format information. For a specific audio format in the at least one fifth audio format indicated by the fifth audio format information, refer to the descriptions in S420. Details are not described herein again.

S550: The first communication entity performs IVAS decoding on the first audio data based on the fifth audio format information.

S560: The first communication entity sends second audio data to the second communication entity, where the second audio data is generated by performing IVAS encoding based on the sixth audio format information. Correspondingly, the second communication entity receives the second audio data from the first communication entity.

Specifically, second audio data is generated by the first communication entity by performing IVAS encoding based on one of the at least one sixth audio format indicated by the sixth audio format information. For a specific audio format in the at least one sixth audio format indicated by the sixth audio format information, refer to the descriptions in S420. Details are not described herein again.

S570: The second communication entity performs IVAS decoding on the second audio data based on the sixth audio format information.

It may be understood that a manner of exchanging information between the first communication entity and the second communication entity is not limited in this embodiment of this application. For example, the second communication entity may directly send information (for example, the first audio format information and the second audio format information) to the first communication entity, or may send the information to the first communication entity via another network element or device. This is not limited in this application.

In the foregoing technical solution, a codec negotiation mechanism with a finer granularity is provided. On a basis of using an IVAS speech codec by the first communication entity and the second communication entity, an IVAS encoding audio format and an IVAS decoding audio format are further negotiated, so that the first communication entity and the second communication entity can perform audio communication based on IVAS codec capabilities actually supported by the first communication entity and the second communication entity and by using the appropriate encoding audio format and the appropriate decoding audio format, thereby avoiding a waste of power consumption and bandwidths.

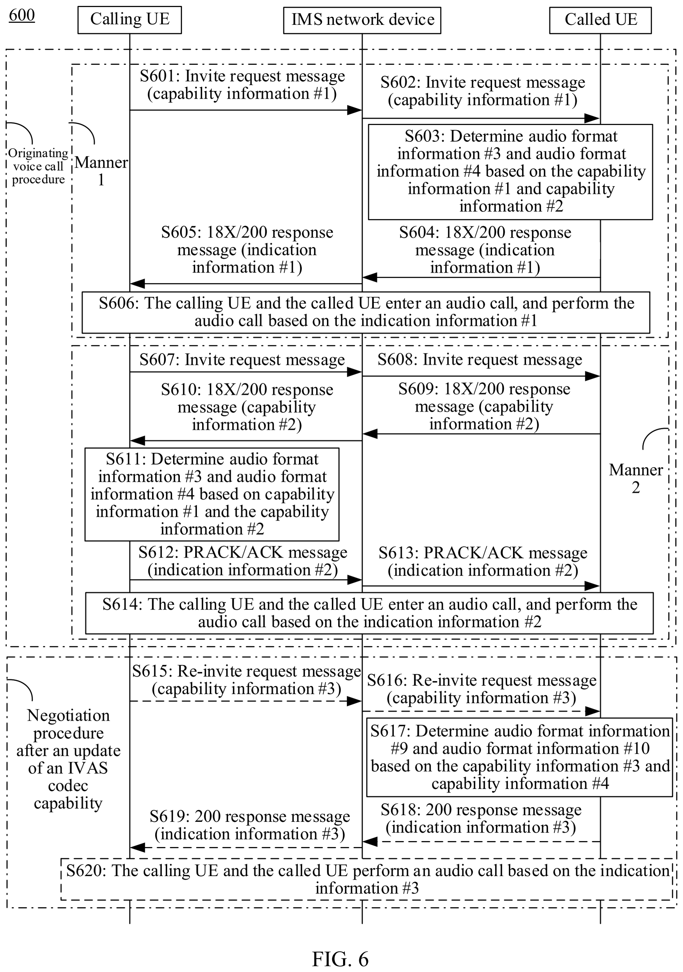

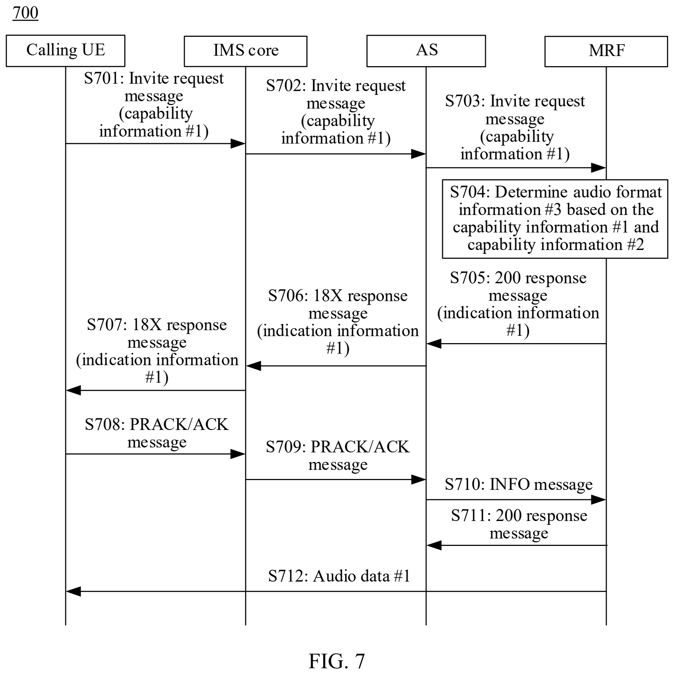

The following describes the method 500 by using examples with reference to specific scenarios in FIG. 6 and FIG. 7.

FIG. 6 is a diagram of an audio parameter negotiation method 600 according to an embodiment of this application. It may be understood that the method 600 is a possible implementation applied to an IMS call scenario. In Manner 1 of an originating voice call procedure and a negotiation procedure after an update of an IVAS codec capability in the method 600, an example in which a second communication entity is used as called UE, and a first communication entity is calling UE is used for description; and in Manner 2 of an originating voice call procedure in the method 600, an example in which a second communication entity is calling UE and a first communication entity is called UE is used for description. The following describes the method 600 by using examples with reference to steps in FIG. 6.

Manner 1 of the originating voice call procedure: A calling device initiates an audio parameter negotiation procedure.

S601: The calling UE sends an invite request message to an IMS network device. Correspondingly, the IMS network device receives the invite request message from the calling UE.

S602: The IMS network device sends the invite request message to the called UE. Correspondingly, the called UE receives the invite request message from the IMS network device.

It may be understood that the calling UE sends the invite request message to the called UE via the IMS network device, where the invite request message is for requesting to establish an audio call connection between the calling UE and the called UE.

It may be understood that the IMS network device herein is one or more network elements inside an IMS network, and a procedure of exchanging information between the network elements inside the IMS network is omitted in the figure.

Optionally, the invite request message includes capability information #1, where the capability information #1 includes audio format information #1 (namely, an example of first audio format information) and audio format information #2 (namely, an example of second audio format information). The audio format information #1 indicates an audio format available to at least one calling UE for IVAS encoding, and the audio format information #2 indicates an audio format available to the at least one calling UE for IVAS decoding.

Optionally, the invite request message includes a session description protocol (session description protocol, SDP) offer #1, and the SDP offer #1 includes audio media information supported by the calling UE. For example, the capability information #1 may be carried in the SDP offer #1.

For example, the following provides several possible manners of carrying the capability information #1 in the SDP offer #1. For ease of understanding that the SDP offer #1 carries the capability information #1, a specific example of the capability information #1 is first provided herein. For example, the capability information #1 may be jointly indicated by using tables shown in Table 5 and Table 3. For a specific determining manner, refer to the descriptions of Example 2 in S410. Details are not described herein again.

Table 5

| | Combination 1 |
|---|---|
| Decoding audio format type and corresponding maximum rate | MONO |
| | 9.6 |
| | STEREO |
| | 24 |
| Encoding audio format type and corresponding maximum rate | MONO |
| | 9.6 |
| | STEREO |
| | 32 |

(continued)

| | Combination 1 |
|---|---|
| | FOA |
| | 48 |

Example 1:

m=audio 49152 RTP/AVP 100 96

a=rtpmap:100 IVAS/8000

a=fmtp:100 bit-rate-list={(mono, 5.9|7.2|9.6), (stereo, 13.2|24|32), (foa, 24|32|48)};

dec-format-list={[mono/9.6, stereo/24]}; enc-format-list={[mono/9.6, stereo/32, foa/48]}

The following describes parameters in this manner.

bit-rate-list={(mono, 5.9|7.2|9.6), (stereo, 13.2|24|32), (foa, 24|32|48)} indicates rate information (namely, information indicated in Table 3) supported by mono, stereo, and foa.

(Mono, 5.9|7.2|9.6) indicates that rates supported by mono are 5.9 kpbs, 7.2 kpbs, and 9.6 kpbs. That is, (mono, 5.9|7.2|9.6) indicates three audio formats, and audio format parameters corresponding to the three audio formats are {mono, 5.9}, {mono, 7.2} and {mono, 9.6}.

It should be noted that a name of the audio format type in this embodiment of this application is case-insensitive. For example, mono and MONO in this application represent a same meaning. Details are not described one by one below.

For example, dec-format-list=[mono/9.6, stereo/24] indicates that two types of decoding audio format types: mono and stereo are supported, and maximum rates supported by mono and stereo are 9.6 kbps and 24 kbps respectively.

For example, enc-format-list=[mono/9.6, stereo/32, foa/48] indicates that three types of encoding audio format types: mono, stereo, and foa are supported, and maximum rates supported by mono, stereo, and foa are 9.6 kbps, 32 kbps, and 48 kbps respectively.

It should be understood that the dec-format-list includes only one group of decoding audio format types and maximum rates corresponding to encoding audio format types, and a plurality of groups of decoding audio format types and maximum rates corresponding to encoding audio format types are separated by square brackets []. Similarly, the enc-format-list includes only one group of encoding audio format types and maximum rates corresponding to the encoding audio format types, and a plurality of groups of encoding audio format types and maximum rates corresponding to the encoding audio format types are separated by square brackets []. Information in one pair of square brackets [] in the dec-format-list and information in one pair of square brackets [] in a corresponding position in the enc-format-list form a combination of codec audio formats (for example, the combination 1 in Table 5).

Example 2:

m=audio 49152 RTP/AVP 100 96

a=rtpmap:100 IVAS/8000

a=fmtp:100 bit-rate-list={(mono, 5.9|7.2|9.6), (stereo, 13.2|24|32), (foa, 24|32|48)};

format-list={[(mono/9.6, stereo/24), (mono/9.6, stereo/32, foa/48)]}

The following describes parameters in this manner.

A meaning of the bit-rate-list is the same as that in Manner 1, and details are not described herein again.

It may be understood that in this example, related information of corresponding codec audio formats and related information of corresponding encoding audio formats in one combination of codec audio formats are separated by parentheses (). For example, format-list={[(mono/9.6, stereo/24), (mono/9.6, stereo/32, foa/48)]} indicates that two decoding audio format types: mono and stereo are supported, maximum rates supported by mono and stereo are 9.6 kbps and 24 kbps respectively, three encoding audio format types: mono, stereo, and foa are supported, and maximum rates supported by mono, stereo, and foa are 9.6 kbps, 32 kbps, and 48 kbps respectively.

It should be understood that in this example, the format-list includes only related information of one combination of codec audio formats. For example, if related information of a plurality of combinations of codec audio formats is included, the related information of the plurality of combinations of codec audio formats is separated by square brackets [].

Example 3:

<div align="center">

m=audio 49152 RTP/AVP 100 96

a=rtpmap:100 IVAS/8000

a=fmtp:100 dec-format-list={[mono/(5.9, 7.2, 9.6), stereo/(13.2, 24)]};

enc-format-list={[mono/(5.9, 7.2, 9.6), stereo/(13.2, 24, 32), foa/(24, 32, 48)]}

</div>

The following describes parameters in this manner.

The dec-format-list indicates decoding audio formats supported by the calling UE. For example, dec-format-list= {[mono/(5.9, 7.2, 9.6), stereo/(13.2, 24)]} indicates that two types of decoding audio format types: mono and stereo are supported, rates supported by mono is 5.9 kpbs, 7.2 kpbs, and 9.6 kpbs, and rates supported by stereo are 13.2 kpbs and 24 kpbs.

The enc-format-list indicates encoding audio formats supported by the calling UE. For example, enc-format-list= {[mono/(5.9, 7.2, 9.6), stereo/(13.2, 24, 32), foa/(24, 32, 48)]} indicates that three encoding audio format types: mono, stereo, and foa are supported, rates supported by mono is 5.9 kpbs, 7.2 kpbs, and 9.6 kpbs, rates supported by stereo are 13.2 kpbs, 24 kpbs, and 32 kpbs, and rates supported by foa are 24 kpbs, 32 kpbs, and 48 kpbs.

It should be understood that the dec-format-list includes only one combination of decoding audio formats, and a plurality of combinations of decoding audio formats are separated by square brackets []. Similarly, the enc-format-list includes only one combination of encoding audio formats, and a plurality of combinations of encoding audio formats are separated by square brackets []. Information in one pair of square brackets [] in the dec-format-list and information in one pair of square brackets [] in a corresponding position in the enc-format-list form a combination of codec audio formats (for example, the combination 1 in Table 5).

Example 4:

<div align="center">

m=audio 49152 RTP/AVP 100 96

a=rtpmap:100 IVAS/8000

a=fmtp:100 format-list={[(mono/(5.9, 7.2, 9.6), stereo/(13.2, 24)),

(mono/(5.9, 7.2, 9.6), stereo/(13.2, 24, 32), foa/(24, 32, 48))]}

</div>

It may be understood that in this example, decoding audio formats and encoding audio formats in one combination of codec audio formats are separated by parentheses (). format-list={[(mono/9.6, stereo/24), (mono/9.6, stereo/32, foa/48)]} indicates that two decoding audio format types: mono and stereo are supported, maximum rates supported by mono and stereo are 9.6 kbps and 24 kbps respectively, three encoding audio format types: mono, stereo, and foa are supported, and maximum rates supported by mono, stereo, and foa are 9.6 kbps, 32 kbps, and 48 kbps respectively.

It should be understood that in this example, the format-list includes only one combination of codec audio formats. For example, if a plurality of combinations of codec audio formats are supported, the plurality of combinations are separated by square brackets [].

S603: The called UE determines audio format information #3 and audio format information #4 based on the capability information #1 and capability information #2.

It should be understood that the capability information #2 includes audio format information #5 (namely, an example of third audio format information) and audio format information #6 (namely, an example of fourth audio format information). The audio format information #5 indicates an audio format available to the at least one called UE for IVAS encoding, and the audio format information #6 indicates an audio format available to the at least one called UE for IVAS decoding.

It should be further understood that the audio format information #3 (namely, an example of fifth audio format information) indicates an audio format to be used when the called UE performs IVAS encoding and/or the calling UE performs IVAS decoding, the audio format information #4 (namely, an example of sixth audio format information) indicates an audio format to be used when the called UE performs IVAS decoding and/or the calling UE performs IVAS encoding.

For example, after receiving the invite request message from the calling UE, the called UE obtains the capability information #1 from the invite request message, and then determines the audio format information #3 and the audio format information #4 based on the capability information #1 and the capability information #2.

S604: The called UE sends a 18X/200 response message to the IMS network device. Correspondingly, the IMS network device receives the 18X/200 response message from the called UE.

It should be noted that the 18X response message in this application is a 180 response message or a 183 response message. Whether the 18X response message is specifically the 180 response message or the 183 response message may be determined based on an interactive network element. Details are not described below.

S605: The IMS network device sends the 18X/200 response message to the calling UE. Correspondingly, the calling UE receives the 18X/200 response message from the IMS network device.

Optionally, the 18X/200 response message includes indication information #1, and the indication information #1 includes the audio format information #3 and the audio format information #4.

Optionally, the 18X/200 response message carries an SDP answer #1, and the SDP answer #1 includes audio media information supported by the called UE. For example, the indication information #1 may be carried in the SDP answer #1 of the 18X/200 response message.

For example, the following provides two possible manners of carrying the indication information #1 in the SDP answer #1. For ease of understanding that the SDP answer #1 carries the indication information #1, a specific example of the indication information #1 is first provided herein. The indication information #1 includes audio format information #3 and audio format information #4. The audio format information #3 indicates two audio formats, and parameters corresponding to the two audio formats are respectively {STEREO, 24} and {STEREO, 32}. The audio format information #4 indicates two audio formats, and parameters corresponding to the two audio formats are respectively {FOA, 24} and {FOA, 32}.

Manner 1: The audio format information #3 and the audio format information #4 are carried by using different parameters:

$$m=\text{audio } 49154 \text{ RTP/AVP } 100 \ 96$$

$$a=\text{rtpmap:}101 \text{ IVAS/}8000$$

$$a=\text{fmtp:}101 \text{ enc-format}=(\text{foa, } 24|32); \text{ dec-format}=(\text{stereo, } 13.2|24)$$

The following describes parameters in this manner.

enc-format=(foa, 24|32) indicates that an encoding signal class of a receiver is foa, and a rate set corresponding to foa is 24 kbps and 32 kbps.

dec-format=(stereo, 13.2|24) indicates that a decoding signal class of the receiver is stereo, and a rate set corresponding to stereo is 13.2 kbps and 24 kbps.

Manner 2: The audio format information #3 and the audio format information #4 are carried by using a same parameter:

m=audio 49154 RTP/AVP 100 96

a=rtpmap:101 IVAS/8000

a=fmtp:101 format-result={(foa, 24|32), (stereo, 13.2|24)}

The following describes parameters in this manner.

format-result={(foa, 24|32), (stereo, 13.2|24)} indicates that an encoding signal class of a receiver is foa, a rate set corresponding to foa is 24 kbps and 32 kbps, a decoding signal class of the receiver is stereo, and a rate set corresponding to stereo is 13.2 kbps and 24 kbps.

S606: The called UE hooks off, and the calling UE and the called UE enter an audio call, and perform the audio call based on the indication information #1.

For specific descriptions of this step, refer to the descriptions in S540 and S550 and/or S560 and S570. Details are not described herein again.

Manner 2 of the originating voice call procedure: A called device (namely, the called UE) triggers a negotiation procedure.

S607: The calling UE sends an invite request message to an IMS network device. Correspondingly, the IMS network device receives the invite request message from the calling UE.

S608: The IMS network device sends the invite request message to the called UE. Correspondingly, the called UE receives the invite request message from the IMS network device.

For example, the calling UE sends the invite request message to the called UE through the IMS network, to initiate an audio call to the called UE. In addition, the calling UE does not include capability information #1 in the invite request message.

S609: The called UE sends a 18X/200 response message to the IMS network device. Correspondingly, the IMS network device receives the 18X/200 response message from the called UE.

S610: The IMS network device sends the 18X/200 response message to the calling UE. Correspondingly, the calling UE receives the 18X/200 response message from the IMS network device.

After ringing or off-hook, the called UE sends the 18X/200 response message to the calling UE via the IMS network device, and includes capability information #2 in the 18X/200 response message. For descriptions of the capability information #2, refer to the descriptions in Manner 1. Details are not described herein again.

Optionally, the called UE includes an SDP offer #2 in the 18X/200 response message, where the SDP offer #2 includes audio media information supported by the called UE. For example, the capability information #2 may be carried in the SDP offer #2.

S611: The calling UE determines audio format information #3 and audio format information #4 based on the capability information #1 and capability information #2.

For example, after receiving the 18X/200 response message from the called UE, the calling UE obtains the capability information #2 from the 18X/200 response message, and then determines the audio format information #3 and the audio format information #4 based on the capability information #2 and the capability information #1. For the capability information #2, the audio format information #3, and the audio format information #4, refer to the descriptions in Manner 1. Details are not described herein again.

S612: The calling UE sends a PRACK/ACK message to the IMS network device. Correspondingly, the IMS network device receives the PRACK/ACK message from the calling UE.

S613: The IMS network device sends a PRACK/ACK message to the called UE. Correspondingly, the called UE receives the PRACK/ACK message from the IMS network device.

For example, after completing S611, the calling UE sends the PRACK/ACK message to the called UE via the IMS network device. The PRACK/ACK message includes indication information #2, and the indication information #2 indicates the audio format information #3 and the audio format information #4. For example, the indication information #2 may be carried in an SDP answer #2 of the PRACK/ACK message.

S614: The calling UE and the called UE enter an audio call, and perform the audio call based on the indication information #2.

For specific descriptions of this step, refer to the descriptions in S540 and S550 and/or S560 and S570. Details are not described herein again.

Optionally, if the IVAS codec capability of the calling UE or the called UE changes (for example, codecs of some high-complexity audio format types may be restricted when a battery level is low), and consequently a previous audio parameter negotiation result is no longer applicable to current audio data transmission, the negotiation procedure needs to be performed again, and includes S615 to S620.

S615: The calling UE sends a re-invite request message to an IMS network device. Correspondingly, the IMS network device receives the re-invite request message from the calling UE.

S616: The IMS network device sends the re-invite request message to the called UE. Correspondingly, the called UE receives the re-invite request message from the IMS network device.

For example, the calling UE sends the re-invite request message to the called UE via the IMS network device, and includes capability information #3 in the re-invite request message. The capability information #3 includes audio format information #7 (namely, an example of first audio format information) and audio format information #8 (namely, an example of second audio format information), the audio format information #7 indicates an audio format available to at least one calling UE for IVAS encoding, and the audio format information #8 indicates an audio format available to the at least one calling UE for IVAS decoding.

S617: The called UE determines audio format information #9 and audio format information #10 based on the capability information #3 and capability information #4.

It should be understood that the capability information #4 includes audio format information #11 (namely, an example of third audio format information) and audio format information #12 (namely, an example of fourth audio format information). The audio format information #1 indicates an audio format available to at least one called UE for IVAS encoding, and the audio format information #2 indicates an audio format available to the at least one called UE for IVAS decoding.

It should be further understood that the audio format information #9 (namely, an example of fifth audio format information) indicates an audio format to be used when the called UE performs IVAS encoding and/or the calling UE performs IVAS decoding, the audio format information #10 (namely, an example of sixth audio format information) indicates an audio format to be used when the called UE performs IVAS decoding and/or the calling UE performs IVAS encoding.

For example, after receiving the invite request message from the calling UE, the called UE obtains the capability information #3 from the invite request message, and then determines the audio format information #9 and the audio format information #10 based on the capability information #3 and the capability information #4.

S618: The called UE sends a 200 response message to the IMS network device. Correspondingly, the IMS network device receives the 200 response message from the called UE.

S619: The IMS network device sends the 200 response message to the calling UE. Correspondingly, the calling UE receives the 200 response message from the IMS network device.

For example, the called UE sends the 200 response message to the calling UE via the IMS network device, and includes indication information #3 in the 200 response message. The indication information #3 indicates audio format information #9 and audio format information 10.

S620: The calling UE and the called UE perform an audio call based on the indication information #3.

For specific descriptions of this step, refer to the descriptions in S540 and S550 and/or S560 and S570. Details are not described herein again.

In the foregoing technical solution, a codec negotiation mechanism with a finer granularity is provided. On a basis of using the IVAS speech codec, the calling UE and the called UE further negotiate an IVAS encoding audio format and an IVAS decoding audio format, and perform audio communication by using an appropriate encoding audio format and an appropriate decoding audio format and based on the IVAS codec capabilities actually supported by both parties in audio communication, thereby avoiding a waste of power consumption and bandwidths.

FIG. 7 is a diagram of an audio parameter negotiation method 700 according to an embodiment of this application. It may be understood that the method 700 is another possible implementation in which the method 500 is applied to an IMS call scenario. In this implementation, an example in which a second communication entity is an MRF and a first communication entity is calling UE is used for description. In this scenario, when the calling UE initiates a voice call, an IMS triggers an announcement playback service, to apply the MRF to use an IVAS codec to play an announcement to the calling UE. The following describes the method 700 by using examples with reference to steps in FIG. 7.

S701: The calling UE sends an invite request message to an IMS core. Correspondingly, the IMS core receives the invite request message from the calling UE.

S702: The IMS core sends the invite request message to an AS. Correspondingly, the AS receives the invite request message from the IMS core.

S703: The AS sends the invite request message to the MRF. Correspondingly, the MRF receives the invite request message from the AS.

Optionally, the invite request message includes capability information #1, where the capability information #1 includes audio format information #1, and the audio format information #1 indicates an audio format available to the calling UE for IVAS decoding.

Optionally, the invite request message includes an SDP offer #1, and the SDP offer #1 includes audio media information supported by the calling UE. For example, the capability information #1 may be carried in a session description protocol (session description protocol, SDP) offer #1 of a response message of the invite request message.

S704: The MRF determines audio format information #3 based on the capability information #1 and capability information #2.

The capability information #2 indicates an audio format available to the MRF for IVAS encoding. The audio format information #3 is an audio format to be used by the MRF for IVAS encoding and/or the calling UE for IVAS decoding.

It should be understood that, when the MRF performs announcement playback, audio data is transmitted in unidirectional bitstream (sent by the MRF to the calling UE). Therefore, the MRF only needs to determine the audio format information #3.

S705: The MRF sends a 200 response message to the AS. Correspondingly, the AS receives the 200 response message from the MRF.

Optionally, the 200 response message includes indication information #1, and the indication information #1 includes the audio format information #3.

S706: The AS sends a 18X response message to the IMS core. Correspondingly, the IMS core receives the 18X response message from the AS.

S707: The IMS core sends the 18X response message to the calling UE. Correspondingly, the calling UE receives the 18X response message from the IMS core.

Optionally, the 18X response message includes the indication information #1. For example, the indication information #1 may be carried in an SDP answer #1 of the 18X response message.

S708: The calling UE sends a PRACK/ACK message to the IMS core. Correspondingly, the IMS core receives the PRACK/ACK message from the calling UE.

S709: The IMS core sends the PRACK/ACK message to the AS. Correspondingly, the AS receives the PRACK/ACK message from the IMS core.

S710: The AS sends an INFO message to the MRF. Correspondingly, the MRF receives the INFO indication from the AS.

The INFO message indicates the MRF to play the announcement to the calling UE.

It may be understood that S708 to S711 are signaling exchange for announcement playback between the calling UE and an IMS network device.

S711: Called UE sends a 200 response message to the AS. Correspondingly, the AS receives the 18X response message from the AS.

The 200 response message indicates that the MRF uses the IVAS codec to play the announcement to the calling UE.

S712: The MRF sends audio data #1 to the calling UE. Correspondingly, the calling UE receives the audio data #1 from the MRF.

The audio data #1 is audio data generated after the MRF encodes, based on the audio format information #3, announcement content that needs to be played to the calling UE.

It should be understood that, in the method 700, the method shown in FIG. 5 is described in detail based on the scenario in which the MRF plays the announcement to the calling UE. The second communication entity is the MRF, and the first communication entity is the calling UE. Based on the scenario in which the MRF plays the announcement to the calling UE, in another possible implementation, the second communication entity may be the calling UE, and the first communication entity may be the MRF. For example, the MRF sends, to the AS by using a 200 response message, an IVAS encoding audio format supported by the MRF. The AS sends, to the IMS core by using a 18X response message, the IVAS encoding audio format supported by the MRF. The IMS core sends, to the calling UE by using the 18X response message, the IVAS encoding audio format supported by the MRF. The calling UE determines audio format information #3 based on an IVAS decoding audio format supported by the calling UE and the IVAS encoding audio format supported by the MRF, and then sends indication information #2 to the MRF by using a PRACK/ACK message, where the indication information #2 includes the audio format information #3. When the AS triggers the MRF to play an announcement to the calling UE, the MRF plays the announcement to the calling UE based on the encoding audio format information #3. A specific procedure is not described herein.

In another possible scenario, in a scenario in which the MRF plays an announcement to called UE, the second communication entity may be the MRF, and the first communication entity may be the called UE. For example, the called UE may send, to the MRF by using a 18X/200 response message, an IVAS decoding audio format supported by the called UE. The MRF determines audio format information #4 based on an IVAS encoding audio format supported by the MRF and the IVAS decoding audio format supported by the called UE, where the audio format information #4 is an audio format to be used when the MRF performs IVAS encoding and/or the called UE performs IVAS decoding. Then, the MRF sends the audio format information #4 to the called UE by using a PRACK/ACK message. When the AS triggers the MRF to play an announcement to the called UE, the MRF encodes, based on the audio format information #4, announcement content that needs to be played by the MRF to the called UE to generate audio data #2, and sends the audio data #2 to the called UE. Based on the scenario in which the MRF plays the announcement to the called UE, in another possible implementation, the second communication entity may be the called UE, and the first communication entity may be the MRF. For example, the MRF may send, to the called UE by using an invite request message, an IVAS encoding audio format supported by the MRF. The called UE determines audio format information #4 based on an IVAS decoding audio format supported by the called UE and the IVAS encoding audio format supported by the MRF. Then, the called UE may send the audio format information #4 to the AS by using a 18X/200 response message. The AS sends the audio format information #4 to the MRF by using an ACK message. When the AS triggers the MRF to play an announcement to the called UE, the MRF encodes, based on the audio format information #4, announcement content that needs to be played by the MRF to the called UE, to generate audio data #2, and sends the audio data #2 to the called UE. A specific procedure is not described herein.

In the foregoing technical solution, when the AS triggers the MRF to play the announcement to the calling UE/called UE, the MRF may encode the announcement content in the IVAS audio format supported by both parties and determined through negotiation performed based on the IVAS codec capabilities actually supported by the MRF and the UE (the calling UE or the called UE). This avoids a waste of power consumption and bandwidths.

It may be understood that, in FIG. 5 to FIG. 7, the second communication entity determines, based on the third audio format information and the fourth audio format information of the second communication entity and the first audio format information and the second audio format information of the first communication entity, audio parameters (namely, the fifth audio format information and the sixth audio format information) used for the audio data transmission between the second communication entity and the first communication entity. In a possible implementation, the third communication entity may alternatively send the first audio format information and the second audio format information of the first communication entity to the second communication entity, so that the second communication entity determines audio parameters used when the first communication entity and the second communication entity perform an audio call. The following describes the method with reference to FIG. 8.

FIG. 8 is a diagram of an audio parameter negotiation method 800 according to an embodiment of this application. The method 800 may include the following steps.

S810: A third communication entity sends first audio format information and second audio format information to a second communication entity. Correspondingly, the second communication entity receives the first audio format information and the second audio format information from the third communication entity, where the first audio format information indicates the at least one first audio format, the second audio format information indicates the at least one second audio format, the first audio format is an audio format available to a first communication entity for immersive voice and audio services IVAS encoding, and the second audio format is an audio format available to the first communication entity for IVAS decoding.

For the first audio format information and the second audio format information, refer to the descriptions in S410. Details are not described herein again.

S820: The second communication entity sends fifth audio format information and sixth audio format information to the third communication entity based on the first audio format information, the second audio format information, third audio format information, and fourth audio format information. Correspondingly, the third communication entity receives the fifth audio format information and the sixth audio format information from the second communication entity.

The fifth audio format information indicates at least one fifth audio format, the sixth audio format information indicates at least one sixth audio format, the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

For descriptions of the information or the audio formats in S810 and S820, refer to the descriptions in S410 and S420. Details are not described herein again.

It may be understood that the first audio format information and the second audio format information reflect an IVAS codec capability of the first communication entity, and the third audio format information and the fourth audio format information reflect an IVAS codec capability of the second communication entity.

Optionally, before the second communication entity sends the fifth audio format information and the sixth audio format information to the third communication entity, the method further includes the following step:

S830: The second communication entity determines the fifth audio format information and the sixth audio format information based on the first audio format information, the second audio format information, the third audio format information, and the fourth audio format information.

For S830, refer to the descriptions in S430. Details are not described herein again.

S840: The third communication entity sends the fifth audio format information and the sixth audio format information to the first communication entity. Correspondingly, the first communication entity receives the fifth audio format information and the sixth audio format information from the third communication entity.

S850: The second communication entity and the first communication entity perform audio data transmission based on the fifth audio format information and the sixth audio format information.

For example, in S850, that the first communication entity and the second communication entity perform audio data transmission based on the fifth audio format information and the sixth audio format information may specifically include S860 and S870 and/or S880 and S890.

For S860 and S870, refer to the descriptions in S540 and S550. For S880 and S890, refer to the descriptions in S560 and S570. Details are not described herein again.

In the foregoing technical solution, a codec negotiation mechanism with a finer granularity is provided. On a basis of using an IVAS speech codec by the second communication entity and the first communication entity, the second communication entity and the third communication entity further negotiate an IVAS encoding audio format and an IVAS decoding audio format that are to be used when the second communication entity and the first communication entity perform audio communication, so that the second communication entity and the first communication entity can perform audio communication based on the actual IVAS codec capabilities of the second communication entity and the first communication entity by using the appropriate encoding audio format and the appropriate decoding audio format, to avoid a waste of power consumption and bandwidths.

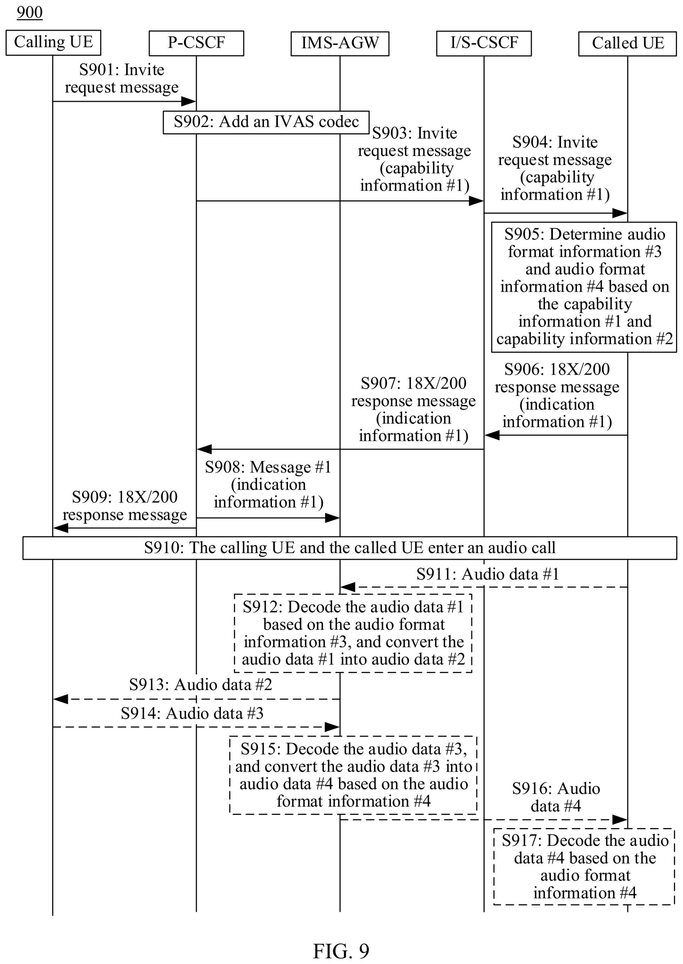

The following describes the method 800 by using examples with reference to a specific scenario in FIG. 9.

FIG. 9 is a diagram of an audio parameter negotiation method 900 according to an embodiment of this application. It may be understood that the method 900 is a possible implementation in which the method 800 is applied to an IMS call scenario. In this implementation, an example in which a second communication entity is called UE, a third communication entity is a P-CSCF, and a first communication entity is an IMS-AGW is used for description. In this scenario, calling UE does not support an IVAS codec. When the calling UE initiates a non-IVAS codec audio call, the IMS-AGW as a codec conversion gateway adds an IVAS codec function, and completes negotiation of an IVAS codec audio format with the called UE. The following describes the method 800 by using examples with reference to the steps in FIG. 8. For ease of description, interaction between an S-CSCF and an AS is omitted in this procedure, and only main steps related to the method provided in this application are described.

S901: The calling UE sends an invite request message to the P-CSCF. Correspondingly, the P-CSCF receives the invite request message from the calling UE.

S902: The P-CSCF determines that the IMS-AGW as the codec conversion gateway needs to add an IVAS codec, and the P-CSCF applies to the IMS-AGW for the addition of the IVAS codec. Correspondingly, the IMS-AGW adds the IVAS codec.

S903: The P-CSCF sends the invite request message to an I/S-CSCF. Correspondingly, the I/S-CSCF receives the invite request message from the P-CSCF.

S904: The I/S-CSCF sends the invite request message to the called UE. Correspondingly, the called UE receives the invite request message from the I/S-CSCF.

It may be understood that the calling UE sends the invite request message to the called UE via a network element in an IMS network device, where the invite request message is for requesting to establish an audio call connection between the calling UE and the called UE.

Optionally, the invite request message in S901 to S903 includes an SDP offer #1, and the SDP offer #1 includes audio media information supported by the calling UE.

Optionally, the invite request message in S902 and S903 includes capability information #1, where the capability information #1 includes audio format information #1 and audio format information #2, the audio format information #1 indicates an audio format available to the at least one IMS-AGW for IVAS encoding, and the audio format information #2 indicates an audio format available to the at least one IMS-AGW for IVAS decoding. For example, the capability information #1 may be carried in the SDP offer #1.

For example, the P-CSCF may determine, based on configuration information of the IMS-AGW, an IVAS encoding audio format and an IVAS decoding audio format that are supported by the IMS-AGW.

S905: The called UE determines audio format information #3 and audio format information #4 based on the capability information #1 and capability information #2.

It should be understood that the capability information #2 includes audio format information #5 and audio format information #6, the audio format information #5 indicates an audio format available to the called UE for IVAS encoding, and the audio format information #6 indicates an audio format available to the called UE for IVAS decoding.

It should be further understood that the audio format information #3 is an audio format to be used by the called UE for IVAS encoding and/or by the IMS-AGW for IVAS decoding, the audio format information #4 indicates an audio format to be used by the called UE for IVAS decoding and/or the IMS-AGW for IVAS encoding.

For example, after receiving the invite request message from the I/S-CSCF, the called UE obtains the capability information #1 from the invite request message, and then determines the audio format information #3 and the audio format information #4 based on the capability information #1 and the capability information #2.

S906: The called UE sends a 18X/200 response message to the I/S-CSCF. Correspondingly, the I/S-CSCF receives the 18X/200 response message from the called UE.

S907: The I/S-CSCF sends the 18X/200 response message to the P-CSCF. Correspondingly, the P-CSCF receives the 18X/200 response message from the I/S-CSCF.

Optionally, the 18X/200 response message includes indication information #1, and the indication information #1 indicates the audio format information #3 and the audio format information #4.

Optionally, the 18X/200 response message carries an SDP answer #1, and the SDP answer #1 includes audio media information supported by the called UE. For example, the indication information #1 may be carried in the SDP answer #1 of the 18X/200 response message.

S908: The P-CSCF sends a message #1 to the IMS-AGW. Correspondingly, the IMS-AGW receives the message #1 from the P-CSCF, where the message #1 includes the indication information #1.

S909: The P-CSCF sends the 18X/200 response message to the calling UE.

S910: The called UE hooks off, and the calling UE and the called UE enter an audio call.

S911: The called UE sends audio data #1 to the IMS-AGW. Correspondingly, the IMS-AGW receives the audio data #1 from the called UE.

It should be understood that the audio data #1 is generated by performing, based on the audio format information #3, IVAS encoding on speech content that needs to be sent by the called UE to the called UE.

S912: The IMS-AGW decodes the audio data #1 based on the audio format information #3, and converts the audio data #1 into audio data #2.

Specifically, the IMS-AGW decodes the audio data #1 based on the audio format information #3, and encodes decoded audio content based on an applicable speech codec type between the IMS-AGW and the calling UE, to generate the audio data #2.

S913: The IMS-AGW sends the audio data #2 to the calling UE. Correspondingly, the calling UE receives the audio data #2 from the IMS-AGW.

S914: The calling UE sends audio data #3 to the IMS-AGW. Correspondingly, the IMS-AGW receives the audio data #3 from the calling UE.

It should be understood that the audio data #3 is speech content that needs to be sent by the calling UE to the called UE.

S915: The IMS-AGW decodes the audio data #3, and converts the audio data #3 into audio data #4 based on the audio format information #4.

Specifically, the IMS-AGW decodes the audio data #3 based on an applicable speech codec type between the IMS-AGW and the calling UE, and then encodes decoded audio content based on the audio format information #4, to generate the audio data #4.

S916: The IMS-AGW sends the audio data #4 to the called UE. Correspondingly, the called UE receives the audio data #4 from the IMS-AGW.

S917: The called UE decodes the audio data #4 based on the audio format information #4.

In the foregoing technical solution, on a basis of using an IVAS speech codec by the called UE and the IMS-AGW, an IVAS encoding audio format and an IVAS decoding audio format are further negotiated, so that the called UE and the IMS-AGW can perform audio communication based on IVAS codec capabilities actually supported by the called UE and the IMS-AGW and by using the appropriate encoding audio format and the appropriate decoding audio format, thereby avoiding a waste of power consumption and bandwidths.

Optionally, this application further provides an audio parameter negotiation method. In the diagram of an architecture shown in FIG. 8, a first communication entity sends first audio format information and second audio format information to a third communication entity. Correspondingly, the third communication entity receives the first audio format information and the second audio format information from the first communication entity. The first audio format information indicates at least one first audio format, the second audio format information indicates at least one second audio format, the first audio format is an audio format available to the first communication entity for immersive voice and audio services IVAS encoding, and the second audio format is an audio format available to the first communication entity for IVAS decoding. The third communication entity sends fifth audio format information and sixth audio format information to the first communication entity and a second communication entity based on the first audio format information, the second audio format information, third audio format information, and fourth audio format information. The third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding. Then, the first communication entity and the second communication entity may perform an audio call based on the fifth audio format information and the sixth audio format information.

For example, based on the method, in the scenario in which the called UE does not support the IVAS codec, the calling UE may initiate an IVAS codec audio call, the IMS-AGW as the codec conversion gateway adds the IVAS codec function, and the P-CSCF completes negotiation of an IVAS codec audio format with the calling UE. For example, the calling UE may send, to the P-CSCF by using an invite request message, an IVAS codec audio format supported by the calling UE, the P-CSCF sends, to the I/S-CSCF by using the invite request message, the IVAS codec audio format supported by the calling UE, and the I/S-CSCF sends, to the called UE by using the invite request message, the IVAS codec audio format supported by the calling UE. Because the called UE does not support the IVAS codec, the called UE sends a 18X/200 response message to the I/S-CSCF. Because the called UE does not negotiate the IVAS codec audio format, the 18X/200 response message does not include a negotiation result of the IVAS codec audio format. Then, the I/S-CSCF sends the 18X/200 response message to the P-CSCF, the P-CSCF determines that the IMS-AGW as the codec conversion gateway needs to add the IVAS codec, and the P-CSCF applies to the IMS-AGW for the addition of the IVAS codec, and determines audio format information #3 and audio format information #4 based on the IVAS codec audio format supported by the calling UE and the IVAS codec audio format supported by the IMS-AGW. The audio format information #3 indicates an audio format to be used when the calling UE performs IVAS encoding and/or the IMS-AGW performs IVAS decoding, and the audio format information #4 indicates an audio format to be used when the calling UE performs IVAS decoding and/or the IMS-AGW performs IVAS encoding. Next, the P-CSCF may send the audio format information #3 and the audio format information #4 to the IMS-AGW and the calling UE. Then, after the calling UE and the called UE enter the audio call, the IMS-AGW performs audio data conversion between the calling UE and the called UE based on the audio format information #3 and the audio format information #4. A specific procedure is not described herein.

It may be understood that the foregoing steps in the foregoing accompanying drawings are merely examples for description, and these are not strictly limited. In addition, sequence numbers of the foregoing processes do not mean execution sequences. An execution sequence of the processes should be determined based on functions and internal logic of the processes, and should not be construed as any limitation on the implementation processes of embodiments of this application.

It may be further understood that some message names in embodiments of this application do not limit the protection scope of embodiments of this application.

It may be further understood that, some optional features in embodiments of this application may be independent of other features in some scenarios, or may be combined with other features in some scenarios. This is not limited.

It may be further understood that, in the foregoing method embodiments, the method and the operation implemented by the device may alternatively be implemented by a component (such as a chip or a circuit) of the device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

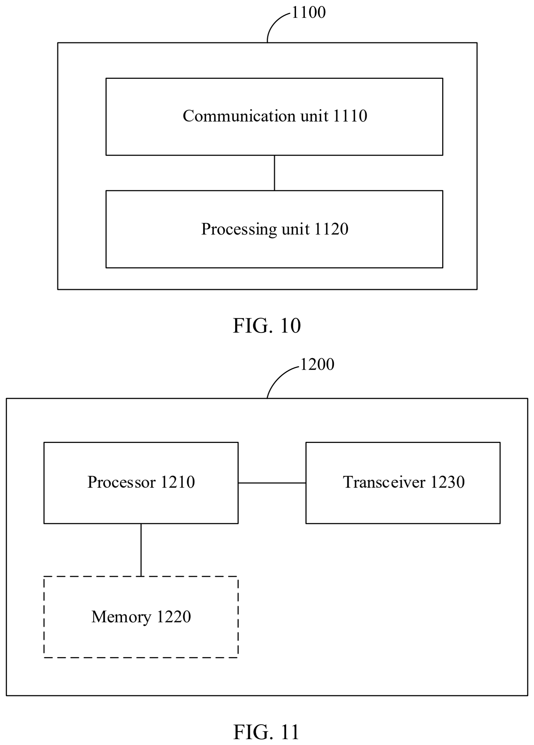

FIG. 10 is a diagram of a communication apparatus 1100 according to an embodiment of this application. The apparatus 1100 includes a communication unit 1110 and a processing unit 1120. The communication unit 1110 may be configured to implement a corresponding communication function. The communication unit 1110 may also be referred to as a communication interface or a communication unit. The processing unit 1120 may be configured to perform a processing operation.

Optionally, the apparatus 1100 further includes a storage unit. The storage unit may be configured to store instructions and/or data. The processing unit 1120 may read the instructions and/or the data in the storage unit, so that the apparatus implements actions of a first terminal or a media network element in the foregoing method embodiments.

In a first design, the apparatus 1100 may be the second communication entity (for example, the second communication entity in FIG. 4 to FIG. 9) in the foregoing embodiments, or may be a component (for example, a chip) of the second communication entity. The apparatus 1100 may implement steps or procedures performed by the second communication entity in the foregoing method embodiments. The communication unit 1110 may be configured to perform a receiving/sending-related operation (for example, an operation of sending and/or receiving data or a message) of the second communication entity in the foregoing method embodiments. For example: The communication unit 1110 may be configured to perform an operation of receiving first audio format information and second audio format information in S410 and an operation of sending fifth audio format information and sixth audio format information in S420 in FIG. 4. The processing unit 1120 may be configured to perform an operation related to data and/or information processing of the second communication entity in the foregoing method embodiments, or an operation other than receiving and sending (for example, an operation other than sending and/or receiving data or a message).

In a possible implementation, the communication unit 1110 receives first audio format information and second audio format information, where the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding. The communication unit 1110 is further configured to send fifth audio format information and sixth audio format information based on the first audio format information, the second audio format information, third audio format information, and fourth audio format information, where the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

Optionally, the communication unit 1110 is specifically configured to receive the first audio format information and the second audio format information from the first communication entity. The communication unit 1110 is specifically configured to send the fifth audio format information and the sixth audio format information to the first communication entity.

Optionally, the communication unit 1110 is specifically configured to receive the first audio format information and the second audio format information from a third communication entity. The communication unit 1110 is specifically configured to send the fifth audio format information and the sixth audio format information to the third communication entity.

Optionally, the communication unit 1110 is further configured to send first audio data to the first communication entity, where the first audio data is generated by performing IVAS encoding based on the fifth audio format information.

Optionally, the communication unit 1110 is further configured to receive second audio data from the first communication entity. The processing unit 1120 is configured to perform IVAS decoding on the second audio data based on the sixth audio format information.

Optionally, the processing unit 1120 is further configured to determine the fifth audio format information and the sixth audio format information based on the first audio format information, the second audio format information, the third audio format information, and the fourth audio format information.

Optionally, the processing unit 1120 is specifically configured to determine the fifth audio format information and the sixth audio format information based on a first policy, the first audio format information, the second audio format information, the third audio format information, and the fourth audio format information, where the first policy is performing searching from high to low according to complexity of a type of the at least one third audio format, or the first policy is performing searching from high to low according to complexity of a type of the at least one fourth audio format.

In a second design, the apparatus 1100 may be the first communication entity in the foregoing embodiments, or may be a component (for example, a chip) of the first communication entity. The apparatus 1100 may implement steps or procedures performed by the first communication entity in the foregoing method embodiments. The communication unit 1110 may be configured to perform a receiving/sending-related operation (for example, an operation of sending and/or receiving data or a message) of the first communication entity in the foregoing method embodiments. For example, the communication unit 1110 may be configured to perform an operation of sending first audio format information and second audio format information to a second communication entity in S510 and an operation of receiving fifth audio format information and sixth audio format information from the second communication entity in S520 in FIG. 5. The processing unit 1120 may be configured to perform an operation related to processing of the first communication entity in the foregoing method embodiments, or an operation other than receiving and sending (for example, an operation other than sending and/or receiving data or a message).

In a possible implementation, the communication unit 1110 is configured to send first audio format information and second audio format information to a second communication entity, where the first audio format information indicates at least one first audio format, the second audio format information indicates at least one second audio format, the first audio format is an audio format available to the first communication entity for immersive voice and audio services IVAS encoding, and the second audio format is an audio format available to the first communication entity for IVAS decoding. The communication unit 1110 is further configured to receive fifth audio format information and sixth audio format information from the second communication entity, where the fifth audio format information and the sixth audio format information are determined based on the first audio format information and the second audio format information, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

Optionally, the communication unit 1110 is further configured to receive first audio data from the second communication entity. The processing unit 1120 is configured to perform IVAS decoding on the first audio data based on the fifth audio format information.

Optionally, the communication unit 1110 is further configured to send second audio data to the second communication entity, where the second audio data is generated by performing IVAS encoding based on the sixth audio format information.

In another possible implementation, the communication unit 1110 is configured to receive fifth audio format information and sixth audio format information from a third communication entity, where the fifth audio format information indicates at least one fifth audio format, the sixth audio format information indicates at least one sixth audio format, the fifth audio format is an audio format to be used by the first communication entity for IVAS decoding and/or by a second communication entity for IVAS encoding, and the sixth audio format is an audio format to be used by the first communication entity for IVAS encoding and/or the second communication entity for IVAS decoding. The communication unit 1110 is further configured to perform audio data transmission with the second communication entity based on the fifth audio format information and the sixth audio format information.

Optionally, the communication unit 1110 is further configured to receive first audio data from the second communication entity. The processing unit 1120 is configured to perform IVAS decoding on the first audio data based on the fifth audio format information.

Optionally, the communication unit 1110 is further configured to send second audio data to the second communication entity, where the second audio data is generated by performing IVAS encoding based on the sixth audio format information.

In a third design, the apparatus 1100 may be the third communication entity in the foregoing embodiments, or may be a component (for example, a chip) of the third communication entity. The apparatus 1100 may implement steps or procedures performed by the third communication entity in the foregoing method embodiments. The communication unit 1110 may be configured to perform a receiving/sending-related operation (for example, an operation of sending and/or receiving data or a message) of the third communication entity in the foregoing method embodiments. For example, the communication unit 1110 may be configured to perform an operation of sending first audio format information and second audio format information to a second communication entity in S810 and an operation of receiving fifth audio format information and sixth audio format information from the second communication entity in S820 in FIG. 8. The processing unit 1120 may be configured to perform an operation related to processing of the third communication entity in the foregoing method embodiments, or an operation other than receiving and sending (for example, an operation other than sending and/or receiving data or a message).

In a possible implementation, the communication unit 1110 is configured to send first audio format information and second audio format information to a second communication entity, where the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding. The communication unit 1110 is further configured to receive fifth audio format information and sixth audio format information from the second communication entity, where the fifth audio format information and the sixth audio format information are determined based on the first audio format information and the second audio format information, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding. The communication unit 1110 is configured to send the fifth audio format information and the sixth audio format information to the first communication entity.

It may be understood that a specific process in which the units perform the foregoing corresponding steps is described in detail in the foregoing method embodiments. For brevity, details are not described herein again.

It may be further understood that, the apparatus 1100 is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the first communication entity in the foregoing embodiments, and may be configured to perform the procedures and/or the steps corresponding to the first communication entity in the foregoing method embodiments. Alternatively, the apparatus 1100 may be specifically the second communication entity in the foregoing embodiments, and may be configured to perform the procedures and/or the steps corresponding to the second communication entity in the foregoing method embodiments. To avoid repetition, details are not described herein again.

The apparatus 1100 in the foregoing solutions has a function of implementing the corresponding steps performed by the first communication entity in the foregoing methods, the apparatus 1100 in the foregoing solutions has a function of implementing the corresponding steps performed by the second communication entity in the foregoing methods, or the apparatus 1100 in the foregoing solutions has a function of implementing the corresponding steps performed by the third communication entity in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit in the communication unit may be replaced with a transmitter, and a receiving unit in the communication unit may be replaced with a receiver), and another unit such as the processing unit may be replaced with a processor, to separately perform the receiving/sending operation and the processing-related operation in the method embodiments.

In addition, alternatively, the communication unit 1110 may be a transceiver circuit (for example, may include a receiving circuit and a sending circuit), and the processing unit may be a processing circuit.

It should be noted that the apparatus in FIG. 10 may be the communication entity in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 11 is a diagram of another communication apparatus 1200 according to an embodiment of this application. The apparatus 1200 includes a processor 1210. The processor 1210 is configured to: execute a computer program or instructions stored in a memory 1220, or read data stored in the memory 1220, to perform the methods in the foregoing method embodiments. Optionally, there are one or more processors 1210.

Optionally, as shown in FIG. 11, the apparatus 1200 further includes the memory 1220. The memory 1220 is configured to store the computer program or instructions and/or the data. The memory 1220 and the processor 1210 may be integrated, or may be disposed separately. Optionally, there are one or more memories 1220.

Optionally, as shown in FIG. 11, the apparatus 1200 further includes a transceiver 1230, and the transceiver 1230 is configured to: receive and/or send a signal. For example, the processor 1210 is configured to control the transceiver 1230 to receive the signal and/or send the signal.

In a solution, the apparatus 1200 is configured to implement operations performed by the first communication entity in the foregoing method embodiments.

In another solution, the apparatus 1200 is configured to implement operations performed by the second communication entity in the foregoing method embodiments.

In still another solution, the apparatus 1200 is configured to implement operations performed by the third communication entity in the foregoing method embodiments.

It may be understood that the processor in embodiments of this application may be a central processing unit (central processing unit, CPU), or may be another general-purpose processor, a digital signal processor (digital format processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be understood that, when the processor is a general-purpose processor, a DSP, an ASIC, an FPGA or another programmable logic device, a discrete gate or a transistor logic device, or a discrete hardware component, the memory (a storage module) may be integrated into the processor.

It may be further understood that, the memory described in this specification is intended to include but is not limited to these memories and any memory of another appropriate type.

An embodiment of this application further provides a computer-readable storage medium. The computer-readable storage medium stores computer instructions used to implement the method performed by the first communication entity, the second communication entity, or the third communication entity in the foregoing method embodiments.

An embodiment of this application further provides a computer program product, including instructions. When the instructions are executed by a computer, the method performed by the first communication entity, the second communication entity, or the third communication entity in the foregoing method embodiments is implemented.

An embodiment of this application further provides a communication system, including at least one of the foregoing first communication entity, the foregoing second communication entity, and the foregoing third communication entity.

For explanations and beneficial effect of related content in any one of the apparatuses provided above, refer to the corresponding method embodiment provided above. Details are not described herein again.

In several embodiments provided in this application, it should be understood that the disclosed apparatuses and methods may be implemented in other manners. For example, the apparatus embodiments described above are merely examples. For example, division into the units is merely logical function division, and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An audio parameter negotiation method, comprising:

   receiving first audio format information and second audio format information, wherein the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding; and
   sending fifth audio format information and sixth audio format information based on the first audio format information, the second audio format information, third audio format information, and fourth audio format information, wherein the third audio format information indicates at least one third audio format, the fourth audio format information indicates at least one fourth audio format, the third audio format is an audio format available to a second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding.

2. The method according to claim 1, wherein

   the at least one fifth audio format is an intersection set of the at least one second audio format and the at least one third audio format; and

the at least one sixth audio format is an intersection set of the at least one first audio format and the at least one fourth audio format.

3. The method according to claim 1 or 2, wherein

the receiving the first audio format information and the second audio format information comprises: receiving the first audio format information and the second audio format information from the first communication entity; and the sending the fifth audio format information and the sixth audio format information comprises: sending the fifth audio format information and the sixth audio format information to the first communication entity.

4. The method according to claim 3, wherein
the receiving the first audio format information and the second audio format information from the first communication entity comprises:

receiving a first request message from the first communication entity, wherein the first request message is an invite invite request message or a re-invite re-invite request message, and the first request message comprises the first audio format information and the second audio format information; and
the sending the fifth audio format information and the sixth audio format information to the first communication entity comprises:
sending a response message of the first request message to the first communication entity, wherein the response message comprises the fifth audio format information and the sixth audio format information.

5. The method according to any one of claims 1 to 4, wherein

the first communication entity is a calling terminal device, and the second communication entity is a called terminal device;
the first communication entity is a calling terminal device, and the second communication entity is a media resource function network element; or
the first communication entity is a media resource function network element, and the second communication entity is a called terminal device.

6. The method according to claim 3, wherein
the receiving the first audio format information and the second audio format information from the first communication entity comprises:

receiving a first response message from the first communication entity, wherein the first response message is a 18X response message or a 200 response message, the first response message comprises the first audio format information and the second audio format information, and the 18X response message is a 180 response message or a 183 response message; and
the sending the fifth audio format information and the sixth audio format information to the first communication entity comprises:
sending an acknowledgment message of the first response message to the first communication entity, wherein the acknowledgment message comprises the fifth audio format information and the sixth audio format information.

7. The method according to any one of claims 1 to 3 and 6, wherein

the first communication entity is a called terminal device, and the second communication entity is a calling terminal device;
the first communication entity is a called terminal device, and the second communication entity is a media resource function network element; or
the first communication entity is a media resource function network element, and the second communication entity is a calling terminal device.

8. The method according to claim 1 or 2, wherein

the receiving the first audio format information and the second audio format information comprises: receiving the first audio format information and the second audio format information from a third communication entity; and

the sending the fifth audio format information and the sixth audio format information comprises: sending the fifth audio format information and the sixth audio format information to the third communication entity.

9. The method according to claim 8, wherein
the receiving the first audio format information and the second audio format information from the third communication entity comprises:

receiving a first request message from the third communication entity, wherein the first request message is an invite invite request message or a re-invite re-invite request message, and the first request message comprises the first audio format information and the second audio format information; and
the sending the fifth audio format information and the sixth audio format information to the third communication entity comprises:
sending a response message of the first request message to the third communication entity, wherein the response message comprises the fifth audio format information and the sixth audio format information.

10. The method according to claim 8 or 9, wherein
the third communication entity is a proxy-call session control function network element, the second communication entity is a called terminal device, and the first communication entity is an internet protocol multimedia subsystem access gateway.

11. The method according to claim 8, wherein
the receiving the first audio format information and the second audio format information from the third communication entity comprises:

receiving a first response message from the third communication entity, wherein the first response message is a 18X response message or a 200 response message, the first response message comprises the first audio format information and the second audio format information, and the 18X response message is a 180 response message or a 183 response message; and
the sending the fifth audio format information and the sixth audio format information to the third communication entity comprises:
sending an acknowledgment message of the first response message to the third communication entity, wherein the acknowledgment message comprises the fifth audio format information and the sixth audio format information.

12. The method according to claim 8 or 11, wherein
the third communication entity is a proxy-call session control function network element, the second communication entity is a calling terminal device, and the first communication entity is an internet protocol multimedia subsystem access gateway.

13. The method according to any one of claims 1 to 12, wherein the method further comprises:
sending first audio data to the first communication entity, wherein the first audio data is generated by performing IVAS encoding based on the fifth audio format information.

14. The method according to any one of claims 1 to 13, wherein the method further comprises:

receiving second audio data from the first communication entity; and
performing IVAS decoding on the second audio data based on the sixth audio format information.

15. The method according to any one of claims 1 to 14, wherein any one of the first audio format information to the fourth audio format information correspondingly comprises an indicated type of the audio format and an indicated rate of the audio format.

16. The method according to any one of claims 1 to 15, wherein the sending the fifth audio format information and the sixth audio format information based on the first audio format information, the second audio format information, the third audio format information, and the fourth audio format information comprises:
determining the fifth audio format information and the sixth audio format information based on the first audio format information, the second audio format information, the third audio format information, and the fourth audio format information.

17. The method according to claim 16, wherein the determining the fifth audio format information and the sixth audio format information based on the first audio format information, the second audio format information, the third audio format information, and the fourth audio format information comprises:
determining the fifth audio format information and the sixth audio format information based on a first policy, the first audio format information, the second audio format information, the third audio format information, and the fourth audio format information, wherein the first policy is performing searching from high to low according to complexity of a type of the at least one third audio format, or the first policy is performing searching from high to low according to complexity of a type of the at least one fourth audio format.

18. The method according to any one of claims 1 to 17, wherein types of audio formats supported by an IVAS codec comprise mono, stereo, multi-channel, objects, first-order ambisonics FOA, higher-order ambisonics HOA, and metadata-assisted spatial audio MASA.

19. An audio parameter negotiation method, comprising:

sending first audio format information and second audio format information, wherein the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding; and
receiving fifth audio format information and sixth audio format information, wherein the fifth audio format information and the sixth audio format information are determined based on the first audio format information and the second audio format information, the fifth audio format information indicates at least one fifth audio format, the sixth audio format information indicates at least one sixth audio format, the fifth audio format is an audio format to be used by the first communication entity performs IVAS decoding and/or by the second communication entity for IVAS encoding, and the sixth audio format is an audio format to be used by the first communication entity for IVAS encoding and/or the second communication entity for IVAS decoding.

20. The method according to claim 19, wherein

the sending the first audio format information and the second audio format information comprises: sending the first audio format information and the second audio format information to the second communication entity; and
the receiving the fifth audio format information and the sixth audio format information comprises: receiving the fifth audio format information and the sixth audio format information from the second communication entity.

21. The method according to claim 20, wherein the method further comprises:

receiving first audio data from the second communication entity; and
performing IVAS decoding on the first audio data based on the fifth audio format information.

22. The method according to claim 20 or 21, wherein the method further comprises:
sending second audio data to the second communication entity, wherein the second audio data is generated by performing IVAS encoding based on the sixth audio format information.

23. The method according to any one of claims 20 to 22, wherein
the sending the first audio format information and the second audio format information to the second communication entity comprises:

sending a first request message to the second communication entity, wherein the first request message is an invite invite request message or a re-invite re-invite request message, and the first request message comprises the first audio format information and the second audio format information; and
the receiving the fifth audio format information and the sixth audio format information from the second communication entity comprises:
receiving a response message of the first request message from the second communication entity, wherein the response message comprises the fifth audio format information and the sixth audio format information.

24. The method according to any one of claims 20 to 23, wherein

the first communication entity is a calling terminal device, and the second communication entity is a called terminal device;

the first communication entity is a calling terminal device, and the second communication entity is a media resource function network element; or

the first communication entity is a media resource function network element, and the second communication entity is a called terminal device.

25. The method according to any one of claims 20 to 22, wherein
the sending the first audio format information and the second audio format information to the second communication entity comprises:

sending a first response message to the second communication entity, wherein the first response message is a 18X response message or a 200 response message, the first response message comprises the first audio format information and the second audio format information, and the 18X response message is a 180 response message or a 183 response message; and
the receiving the fifth audio format information and the sixth audio format information from the second communication entity comprises:
receiving an acknowledgment message of the first response message from the second communication entity, wherein the acknowledgment message comprises the fifth audio format information and the sixth audio format information.

26. The method according to any one of claims 20 to 22 and 25, wherein

the first communication entity is a called terminal device, and the second communication entity is a calling terminal device;
the first communication entity is a called terminal device, and the second communication entity is a media resource function network element; or
the first communication entity is a media resource function network element, and the second communication entity is a calling terminal device.

27. The method according to claim 20, comprising:
sending the fifth audio format information and the sixth audio format information to the first communication entity.

28. The method according to claim 27, wherein
the sending the first audio format information and the second audio format information to the second communication entity comprises:

sending a first request message to the second communication entity, wherein the first request message is an invite invite request message or a re-invite re-invite request message, and the first request message comprises the first audio format information and the second audio format information; and
the receiving the fifth audio format information and the sixth audio format information from the second communication entity comprises:
receiving a response message of the first request message from the second communication entity, wherein the response message comprises the fifth audio format information and the sixth audio format information.

29. The method according to claim 28, wherein
the second communication entity is a called terminal device, and the first communication entity is an internet protocol multimedia subsystem access gateway.

30. The method according to claim 27, wherein
the sending the first audio format information and the second audio format information to the second communication entity comprises:

sending a first response message to the second communication entity, wherein the first response message is a 18X response message or a 200 response message, the first response message comprises the first audio format information and the second audio format information, and the 18X response message is a 180 response message or a 183 response message; and
the receiving the fifth audio format information and the sixth audio format information from the second communication entity comprises:
receiving an acknowledgment message of the first response message from the second communication entity, wherein the acknowledgment message comprises the fifth audio format information and the sixth audio format information.

31. The method according to claim 30, wherein
the second communication entity is a calling terminal device, and the first communication entity is an internet protocol multimedia subsystem access gateway.

32. The method according to any one of claims 19 to 31, wherein any one of the first audio format information to the sixth audio format information correspondingly comprises an indicated type of the audio format and an indicated rate of the audio format.

33. The method according to any one of claims 19 to 32, wherein types of audio formats supported by an IVAS codec comprise mono, stereo, multi-channel, objects, first-order ambisonics FOA, higher-order ambisonics HOA, and metadata-assisted spatial audio MASA.

34. An audio parameter negotiation method, comprising:

receiving fifth audio format information and sixth audio format information, wherein the fifth audio format information indicates at least one fifth audio format, the sixth audio format information indicates at least one sixth audio format, the fifth audio format is an audio format to be used by the first communication entity for immersive voice and audio services IVAS decoding and/or by the second communication entity for IVAS encoding, and the sixth audio format is an audio format to be used by the first communication entity for IVAS encoding and/or the second communication entity for IVAS decoding; and
performing audio data transmission with the second communication entity based on the fifth audio format information and the sixth audio format information.

35. The method according to claim 34, wherein the performing audio data transmission with the first communication entity based on the fifth audio format information and the sixth audio format information comprises:

receiving first audio data from the second communication entity; and
performing IVAS decoding on the first audio data based on the fifth audio format information.

36. The method according to claim 34 or 35, wherein the performing audio data transmission with the first communication entity based on the fifth audio format information and the sixth audio format information comprises:
sending second audio data to the second communication entity, wherein the second audio data is generated by performing IVAS encoding based on the sixth audio format information.

37. The method according to claim 36, wherein
the receiving the fifth audio format information and the sixth audio format information comprises: receiving the fifth audio format information and the sixth audio format information from a third communication entity.

38. The method according to claim 37, wherein

the third communication entity is a proxy-call session control function network element, the second communication entity is a called terminal device, and the first communication entity is an internet protocol multimedia subsystem access gateway; or
the third communication entity is a proxy-call session control function network element, the second communication entity is a calling terminal device, and the first communication entity is an internet protocol multimedia subsystem access gateway.

39. The method according to any one of claims 34 to 38, wherein the fifth audio format information or the sixth audio format information correspondingly comprises an indicated type of the audio format and an indicated rate of the audio format.

40. The method according to any one of claims 34 to 39, wherein types of audio formats supported by an IVAS codec comprise mono, stereo, multi-channel, objects, first-order ambisonics FOA, higher-order ambisonics HOA, and metadata-assisted spatial audio MASA.

**41.** An audio parameter negotiation method, comprising:

sending first audio format information and second audio format information to a second communication entity, wherein the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding;

receiving the first audio format information and the second audio format information from the first communication entity;

sending fifth audio format information and sixth audio format information to the first communication entity based on the first audio format information, the second audio format information, third audio format information, and fourth audio format information, wherein the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding; and

receiving the fifth audio format information and the sixth audio format information from the second communication entity.

**42.** An audio parameter negotiation method, comprising:

sending first audio format information and second audio format information to a second communication entity, wherein the first audio format information indicates at least one first audio format, the second audio format information indicates at least one second audio format, the first audio format is an audio format available to a first communication entity for immersive voice and audio services IVAS encoding, and the second audio format is an audio format available to the first communication entity for IVAS decoding;

receiving the first audio format information and the second audio format information from a third communication entity;

sending fifth audio format information and sixth audio format information to the third communication entity based on the first audio format information, the second audio format information, third audio format information, and fourth audio format information, wherein the third audio format information indicates at least one third audio format, the fourth audio format information indicates at least one fourth audio format, the third audio format is an audio format available to the second communication entity for IVAS encoding, the fourth audio format is an audio format available to the second communication entity for IVAS decoding, the fifth audio format information indicates at least one fifth audio format, the sixth audio format information indicates at least one sixth audio format, the fifth audio format is an audio format to be used by the first communication entity for IVAS decoding and/or the second communication entity for IVAS encoding, and the sixth audio format is an audio format to be used by the first communication entity for IVAS encoding and/or the second communication entity for IVAS decoding;

receiving the fifth audio format information and the sixth audio format information from the second communication entity;

sending the fifth audio format information and the sixth audio format information to the first communication entity; and

receiving the fifth audio format information and the sixth audio format information from the third communication entity.

**43.** The method according to claim 41 or 42, wherein the method further comprises:

sending first audio data to the first communication entity, wherein the first audio data is generated by performing IVAS encoding based on the fifth audio format information;

receiving the first audio data from the second communication entity; and

performing IVAS decoding on the first audio data based on the fifth audio format information.

**44.** The method according to any one of claims 41 to 43, wherein the method further comprises:

sending second audio data to the second communication entity, wherein the second audio data is generated by performing IVAS encoding based on the sixth audio format information;
receiving the second audio data from the first communication entity; and
performing IVAS decoding on the second audio data based on the sixth audio format information.

45. A communication apparatus, wherein the apparatus comprises a module configured to perform the method according to any one of claims 1 to 18, a module configured to perform the method according to any one of claims 19 to 33, or a module configured to perform the method according to any one of claims 34 to 40.

46. A communication apparatus, comprising:
a processor, configured to execute a computer program stored in a memory, to cause the apparatus to perform the method according to any one of claims 1 to 18, to cause the apparatus to perform the method according to any one of claims 19 to 33, or to cause the apparatus to perform the method according to any one of claims 34 to 40.

47. A computer program product, wherein the computer program product comprises instructions used to perform the method according to any one of claims 1 to 18, the computer program product comprises instructions used to perform the method according to any one of claims 19 to 33, or the computer program product comprises instructions used to perform the method according to any one of claims 34 to 40.

48. A computer-readable storage medium, wherein the computer-readable storage medium stores a computer program, and when the computer program runs on a computer, the computer is caused to perform the method according to any one of claims 1 to 18, the computer is caused to perform the method according to any one of claims 19 to 33, or the computer is caused to perform the method according to any one of claims 34 to 40.

49. A communication system, comprising a first communication entity and a second communication entity, wherein the second communication entity is configured to perform the method according to any one of claims 1 to 7 and 13 to 18, and the first communication entity is configured to perform the method according to any one of claims 19 to 26, 32, and 33.

50. A communication system, comprising a first communication entity, a second communication entity, and a third communication entity, wherein
the second communication entity is configured to perform the method according to any one of claims 1, 2, and 8 to 18, the first communication entity is configured to perform the method according to any one of claims 34 to 40, and the third communication entity is configured to perform the method according to any one of claims 19, 20, and 27 to 33.

FIG. 1

FIG. 2

300

FIG. 3

400

S410: A second communication entity receives first audio format information and second audio format information

S430: The second communication entity determines fifth audio format information and sixth audio format information based on the first audio format information, the second audio format information, third audio format information, and fourth audio format information

S420: The second communication entity sends the fifth audio format information and the sixth audio format information

FIG. 4

500

Second communication entity

First communication entity

S510: First audio format information and second audio format information

S530: Determine fifth audio format information and sixth audio format information based on the first audio format information, the second audio format information, third audio format information, and fourth audio format information

S520: Fifth audio format information and sixth audio format information

S540: First audio data

S550: Perform IVAS decoding on the first audio data based on the fifth audio format information

S560: Second audio data

S570: Perform IVAS decoding on the second audio data based on the sixth audio format information

FIG. 5

600

| Calling UE | IMS network device | Called UE |

**Originating voice call procedure**

**Manner 1**

S601: Invite request message (capability information #1)

S602: Invite request message (capability information #1)

S603: Determine audio format information #3 and audio format information #4 based on the capability information #1 and capability information #2

S605: 18X/200 response message (indication information #1)

S604: 18X/200 response message (indication information #1)

S606: The calling UE and the called UE enter an audio call, and perform the audio call based on the indication information #1

S607: Invite request message

S608: Invite request message

S610: 18X/200 response message (capability information #2)

S609: 18X/200 response message (capability information #2)

**Manner 2**

S611: Determine audio format information #3 and audio format information #4 based on capability information #1 and the capability information #2

S612: PRACK/ACK message (indication information #2)

S613: PRACK/ACK message (indication information #2)

S614: The calling UE and the called UE enter an audio call, and perform the audio call based on the indication information #2

**Negotiation procedure after an update of an IVAS codec capability**

S615: Re-invite request message (capability information #3)

S616: Re-invite request message (capability information #3)

S617: Determine audio format information #9 and audio format information #10 based on the capability information #3 and capability information #4

S619: 200 response message (indication information #3)

S618: 200 response message (indication information #3)

S620: The calling UE and the called UE perform an audio call based on the indication information #3

FIG. 6

700

FIG. 7

800

| Second communication entity | Third communication entity | First communication entity |

S810: First audio format information and second audio format information

S830: Determine fifth audio format information and sixth audio format information based on the first audio format information, the second audio format information, third audio format information, and fourth audio format information

S820: Fifth audio format information and sixth audio format information

S840: Fifth audio format information and sixth audio format information

S850: The first communication entity and the second communication entity perform audio data transmission based on the fifth audio format information and the sixth audio format information

S860: First audio data

S870: Perform IVAS decoding on the first audio data based on the fifth audio format information

S880: Second audio data

S890: Perform IVAS decoding on the second audio data based on the sixth audio format information

FIG. 8

900

| Calling UE | P-CSCF | IMS-AGW | I/S-CSCF | Called UE |

S901: Invite request message

S902: Add an IVAS codec

S903: Invite request message (capability information #1)

S904: Invite request message (capability information #1)

S905: Determine audio format information #3 and audio format information #4 based on the capability information #1 and capability information #2

S906: 18X/200 response message (indication information #1)

S907: 18X/200 response message (indication information #1)

S908: Message #1 (indication information #1)

S909: 18X/200 response message

S910: The calling UE and the called UE enter an audio call

S911: Audio data #1

S912: Decode the audio data #1 based on the audio format information #3, and convert the audio data #1 into audio data #2

S913: Audio data #2

S914: Audio data #3

S915: Decode the audio data #3, and convert the audio data #3 into audio data #4 based on the audio format information #4

S916: Audio data #4

S917: Decode the audio data #4 based on the audio format information #4

FIG. 9

1100

Communication unit 1110

Processing unit 1120

FIG. 10

1200

Processor 1210

Transceiver 1230

Memory 1220

FIG. 11

## INTERNATIONAL SEARCH REPORT

International application No.

**PCT/CN2024/108388**

### A. CLASSIFICATION OF SUBJECT MATTER

G10L19/00(2013.01)i; H04L65/65(2022.01)i

According to International Patent Classification (IPC) or to both national classification and IPC

### B. FIELDS SEARCHED

Minimum documentation searched (classification system followed by classification symbols)

IPC:G10L H04L

Documentation searched other than minimum documentation to the extent that such documents are included in the fields searched

Electronic data base consulted during the international search (name of data base and, where practicable, search terms used)

CNABS, CNTXT, CNKI: 编码, 解码, 沉浸式, IVAS, 格式, 协商, 能力, 单声道, 立体声; VEN, EPTXT, USTXT, WOTXT, ELSEVIER: encode, decode, immersive, IVAS, format, negotiate, capability, MONO, STEREO, FOA, MASA

### C. DOCUMENTS CONSIDERED TO BE RELEVANT

| Category* | Citation of document, with indication, where appropriate, of the relevant passages | Relevant to claim No. |
|---|---|---|
| Y | CN 106817351 A (DATANG MOBILE COMMUNICATIONS EQUIPMENT CO., LTD.) 09 June 2017 (2017-06-09)<br>description, paragraphs 116-241, and figures 1-4 | 1-50 |
| Y | CN 111837181 A (DOLBY LABORATORIES LICENSING CORP. et al.) 27 October 2020 (2020-10-27)<br>description, paragraphs 61-70 | 1-50 |
| Y | CN 101056452 A (HUAWEI TECHNOLOGIES CO., LTD.) 17 October 2007 (2007-10-17)<br>description, pages 4-7, and figures 1-3 | 1-50 |
| Y | WO 2020152394 A1 (NOKIA TECHNOLOGIES OY) 30 July 2020 (2020-07-30)<br>description, pages 19-24, and figures 5-11 | 1-50 |
| A | CN 114207714 A (NOKIA TECHNOLOGIES OY) 18 March 2022 (2022-03-18)<br>entire document | 1-50 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 October 2024** | **14 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/108388**

| Patent document cited in search report | | | Publication date (day/month/year) | Patent family member(s) | | | Publication date (day/month/year) |
|---|---|---|---|---|---|---|---|
| CN | 106817351 | A | 09 June 2017 | None | | | |
| CN | 111837181 | A | 27 October 2020 | KR | 20210072736 | A | 17 June 2021 |
| | | | | WO | 2020076708 | A1 | 16 April 2020 |
| | | | | ES | 2978218 | T3 | 09 September 2024 |
| | | | | BR | 112020017360 | A2 | 02 March 2021 |
| | | | | EP | 3864651 | A1 | 18 August 2021 |
| | | | | EP | 3864651 | B1 | 20 March 2024 |
| | | | | IL | 307415 | A | 01 December 2023 |
| | | | | IL | 307415 | B1 | 01 July 2024 |
| | | | | MX | 2023015176 | A | 24 January 2024 |
| | | | | MX | 2020009576 | A | 05 October 2020 |
| | | | | JP | 2022511159 | A | 31 January 2022 |
| | | | | JP | 7488188 | B2 | 21 May 2024 |
| | | | | JP | 2024102273 | A | 30 July 2024 |
| | | | | EP | 4362501 | A2 | 01 May 2024 |
| | | | | US | 2022375482 | A1 | 24 November 2022 |
| | | | | US | 12014745 | B2 | 18 June 2024 |
| | | | | CA | 3091248 | A1 | 16 April 2020 |
| | | | | SG | 11202007627 | RA | 29 September 2020 |
| | | | | IL | 313349 | A | 01 August 2024 |
| | | | | IL | 277363 | A | 30 November 2020 |
| | | | | IL | 277363 | B1 | 01 November 2023 |
| | | | | IL | 277363 | B2 | 01 March 2024 |
| | | | | TW | 202044233 | A | 01 December 2020 |
| | | | | AU | 2019359191 | A1 | 01 October 2020 |
| | | | | AU | 2019359191 | B2 | 11 July 2024 |
| | | | | US | 2021272574 | A1 | 02 September 2021 |
| | | | | US | 11410666 | B2 | 09 August 2022 |
| | | | | IN | 202047034959 | A | 28 August 2020 |
| | | | | ID | 202106003 | A1 | 12 July 2021 |
| | | | | VN | 78964 | A | 26 July 2021 |
| | | | | HK | 40040175 | A0 | 30 July 2021 |
| | | | | RU | 2021109480 | A | 06 October 2022 |
| | | | | RU | 2798821 | C2 | 28 June 2023 |
| | | | | RU | 2023115266 | A | 05 July 2023 |
| | | | | MX | 412168 | B | 12 April 2024 |
| | | | | CN | 111837181 | B | 21 June 2024 |
| | | | | CN | 118522297 | A | 20 August 2024 |
| CN | 101056452 | A | 17 October 2007 | WO | 2007118380 | A1 | 25 October 2007 |
| | | | | EP | 1848190 | A1 | 24 October 2007 |
| | | | | EP | 1848190 | B1 | 20 May 2015 |
| | | | | US | 2007242704 | A1 | 18 October 2007 |
| | | | | US | 7764953 | B2 | 27 July 2010 |
| WO | 2020152394 | A1 | 30 July 2020 | GB | 2580899 | A | 05 August 2020 |
| CN | 114207714 | A | 18 March 2022 | WO | 2021023505 | A1 | 11 February 2021 |
| | | | | EP | 4007999 | A1 | 08 June 2022 |
| | | | | GB | 2586126 | A | 10 February 2021 |
| | | | | US | 2022254355 | A1 | 11 August 2022 |

Form PCT/ISA/210 (patent family annex) (July 2022)

**EP 4 685 792 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311066284X